# EUROPEAN PATENT APPLICATION

(11) **EP 1 439 520 A2**
(43) Date of publication of application: **21.07.2004**
(21) Application number: 04001004.3
(22) Date of filing: 19.01.2004
(51) Int. Cl.: G09G 3/32

(54) **Display device of active matrix drive type**

(30) Priority: 20.01.2003 JP 2003011046; 26.08.2003 JP 2003300684
(71) Applicant: Sanyo Electric Co., Ltd., Moriguchi-shi, Osaka (JP)
(72) Inventor: Yamashita, Atsuhiro c/o Sanyo Electric Co., Ltd., Osaka (JP); Noguchi, Yukihiro c/o Sanyo Electric Co., Ltd., Osaka (JP)
(74) Representative: Glawe, Delfs, Moll & Partner

(57) **Abstract**

The invention provides a display device of the active matrix drive type wherein each of pixels 51 comprises an organic EL display element 50, a drive transistor TR2 for energizing or deenergizing the EL display element 50, a write transistor TR1 to be brought into conduction when impressed with scanning voltage, a capacitance element C1 to be impressed with data voltage by the conduction of the write transistor TR1, and a pulse-width modulation control circuit 90 for on/off-controlling the drive transistor TR2 by pulse-width-modulating the output voltage of the capacitance element C1 with ramp voltage. The modulation control circuit 90 comprises an on-control transistor TR3 and an off-control transistor TR4.

## Description

### FIELD OF THE INVENTION

The present invention relates to display devices, such as organic electroluminescence display devices, which have a display panel comprising a plurality of pixels arranged in the form of a matrix.

### BACKGROUND OF THE INVENTION

Progress has been made in recent years in developing organic electroluminescence displays (hereinafter referred to as "organic EL displays"). Use of organic EL displays, for example, in portable telephones is under study. The methods of driving organic EL display already known are the passive matrix drive method wherein scanning electrodes and data electrodes are used for time division driving, and the active matrix drive method wherein each pixel is held luminescent for one vertical scanning period.

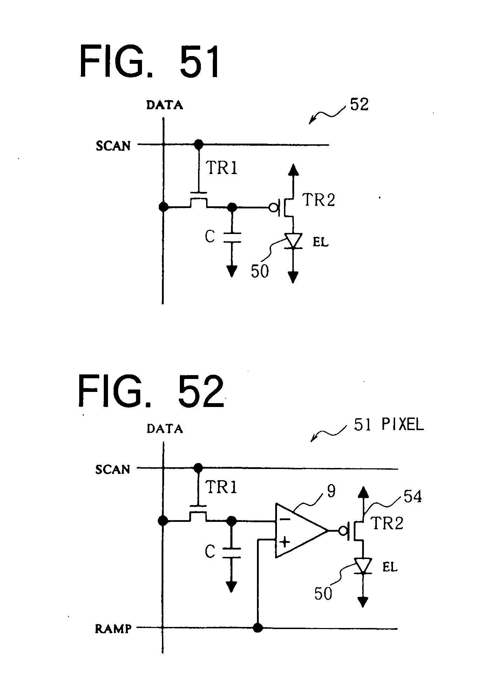

With organic EL displays of the active matrix drive type, each pixel 52 has as shown in FIG. 51 an organic EL element 50, a drive transistor TR2 for controlling the energization of the EL element 50, a write transistor TR1 which is brought into conduction upon application of scanning voltage SCAN by a scanning electrode, and a capacitance element C to which data voltage DATA is applied from a data electrode by the conduction of the write transistor TR1. The output voltage of the capacitance element C is applied to the gate of the drive transistor TR2.

First, voltage is applied to scanning electrodes one after another to cause a plurality of write transistors TR1 connected to the same scanning electrode to conduct, and data voltage (input signal) is applied to data electrodes in synchronism with the scanning. Since the write transistor TR1 is in conduction at this time, a charge corresponding to the data voltage is stored in the capacitance element C. The operating state of the drive transistor TR2 is dependent on the quantity of charge stored in the capacitance element C. When the drive transistor TR2 is brought into conduction, a value of current corresponding to the data voltage is supplied to the EL element 50 via the drive transistor TR2. Consequently, the EL element 50 luminesces with brightness corresponding to the data voltage. The element 50 is held thus luminescent during one vertical scanning period.

The problem of display irregularities is encountered with organic EL displays of the analog drive type wherein a value of current corresponding to the data voltage is supplied to the organic EL element 50 to cause the luminescence of the EL element 50 with brightness in proportion to the data voltage. Accordingly, an organic EL display of the digital drive type has been proposed in which pulse current having a duty ratio in accordance with data voltage is supplied to the organic EL element 50 to thereby realize multi-level gradation (see, for example, JP-A No. 1998-312173).

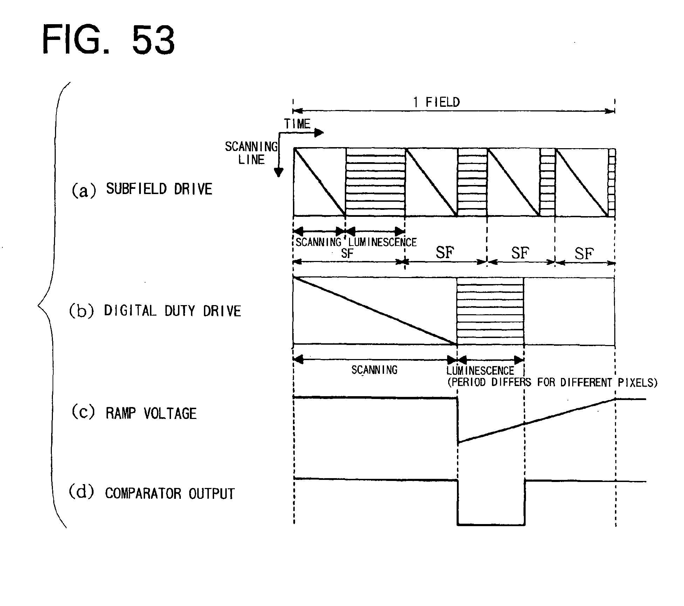

With the organic EL display of the digital drive type, 1 field (or 1 frame) which is the display period of a screen of data or image is divided into a plurality of (N) subfields (or subframes) SF, and each subfield SF comprises a scanning period and a luminescence period as shown in FIG. 53 (a). The scanning periods included in one field are all equal in length, but the luminescence periods have varying lengths of nth power of 2 (n = 0, 1, 2, ... N-1.). In the illustrated case (N = 4), four luminescence periods are given respective lengths of 8, 4, 2, 1, and on/off changes of the luminescence periods realize expression of 16-level gradation.

In each subfield SF of the subfield drive method described, scanning voltage is applied during the scanning period to the write transistor TR1 constituting each pixel to write binary data of the subfield to the capacitance element C, and current corresponding to the binary data is supplied to the EL element by the drive transistor TR2 during the subsequent luminescence period.

However, in the organic EL display using the subfield drive method described, all the horizontal scanning lines must be scanned in each of the subfields within one field, so that there arise the problem that multi-level gradation requires high-speed scanning, and the problem that quasi-contours will occur.

The present applicant has therefore proposed an organic EL display device shown in FIG. 52. This EL display device has pixels 51 each comprising an organic EL element 50, a drive transistor TR2 for energizing or deenergizing the EL element 50 in response to an on/off control signal input to the gate thereof, a write transistor TR1 brought into conduction when scanning voltage is applied to the gate thereof by a scanning driver, a capacitance element C to which data voltage is applied from a data driver by the conduction of the write transistor TR1, and a comparator 9 having a pair of positive and negative input terminals to be supplied with ramp voltage from a ramp voltage generating circuit and output voltage from the capacitance element C for comparing the two voltages. The comparator 9 feeds an output signal to the gate of the drive transistor TR2.

A current supply line 54 is connected to the source of the drive transistor TR2, and the EL element 50 is connected to the drain of the drive transistor TR2. The data driver is connected to one electrode (e.g., source) of the write transistor TR1, and the other electrode (e.g., drain) of the write transistor TR1 has connected thereto one end of the capacitance element C and the inversion input terminal of the comparator 9. The output terminal of the ramp voltage generating circuit is connected to the noninversion input terminal of the comparator 9.

With the organic EL display device described above, one field period is divided into a first half, i.e., a scanning period, and a second half, i.e., a luminescence period as shown in FIG. 53 (b). During the scanning period, scanning voltage is applied, for each horizontal line, from the scanning driver to the write transistor TR1 constituting each pixel 51 to bring the transistor TR1 into conduction, whereby data voltage is applied from the data driver to the capacitance element C and stored therein as a charge. Consequently, data for one field is set in all the pixels constituting the EL display device.

The ramp voltage generating circuit produces a ramp voltage which is held at a high value during the scanning period in the first half of every field period and which varies linearly from a low value to a high value during the luminescence period in the second half of the field period as shown in FIG. 53 (c). During the first-half scanning period, the circuit applies a high voltage to the noninversion input terminal of the comparator 9. This always causes the comparator 9 to produce a high output as shown in FIG. 53 (d) irrespective of the input voltage to the inversion input terminal.

When the ramp voltage is applied from the ramp voltage generating circuit to the noninversion input terminal of the comparator 9 during the second-half luminescence period, the output voltage (data voltage) of the capacitance element C is applied to the inversion input terminal of the comparator 9 at the same time, with the result that the output of the comparator 9 is given low and high two values in accordance with the result of comparison between the two voltages as shown in FIG. 53 (d). Stated more specifically, the comparator produces a low output while the ramp voltage is lower than the data voltage and produces a high output while the ramp voltage is higher than the data voltage. The length of the period during which the comparator output is low is in proportion to the magnitude of the data voltage.

In this way, the output of the comparator 9 becomes low only during a period in proportion to the magnitude of the data voltage, whereby the drive transistor TR2 is brought into conduction only during this period to energize the EL element 50. As a result, the EL element 50 of each pixel 51 luminesces only during the period in proportion to the magnitude of the data voltage for the pixel 51 within one field period, whereby expression of multi-level gradation is realized.

The organic EL display device described does not require high-speed scanning since multi-level gradation can be expressed by scanning once during one field period, and is free of the likelihood of producing quasi-contours. With the organic EL device comprising the pixel 51 shown in FIG. 52, however, there is the likelihood that the characteristics of transistors constituting the comparator 9 inevitably involve variations, with the result that the period during which the output of the comparator 9 is low, namely, the period of time during which current flows through the EL element 50, becomes no longer accurately proportional to the magnitude of the data voltage. Thus, the problem that display irregularities occur to result in an impaired image quality still remains to be solved. With the display device disclosed in JP-B No. 3305946 or JP-A No. 2002-297097, the current flowing through the comparator becomes too great to be negligible as compared with the current flowing through the EL element, hence the problem of increased power consumption.

### SUMMARY OF THE INVENTION

A first object of the present invention is to provide a display device of the active matrix drive type wherein the duration of energization of the display element is accurately in proportion to the value of data voltage despite variations in the characteristics of transistors constituting the pixel of the device.

A second object of the invention is to provide a display device of the active matrix drive type which is diminished in power consumption as compared with devices of the prior art.

The present invention provides a display device of the active matrix drive type comprising a display panel having a plurality of pixels arranged in the form of a matrix, each of the pixels of the display panel having a display element luminescent when supplied with electric power, and a control circuit for controlling the luminescence period of the display element within 1 frame period in accordance with data voltage to be supplied from outside. The control circuit of each pixel of the display panel comprises a first control element for starting to energize the display element and a second control element for deenergizing the display element.

With the display device of the present invention, each pixel of the display panel has therein a first control element for starting to energize the display element and a second control element for deenergizing the display element. In fabricating the display panel, therefore, the two control elements in the same pixel are produced at the same time as positioned in close proximity to each other by the same process. Accordingly, these two control elements involve similar variations in characteristics, such that even if the time for the first control element to operate to start the energization of the display element differs, the time for the second control element to operate to deenergize the display element also differs to the same extent in the same direction. It therefore follows that the duration of energization of the display element is a length of time in accordance with the data voltage despite the variations involved in the characteristics of the two control elements.

The present invention further provides a display device of the active matrix drive type comprising a display panel having a plurality of pixels arranged in the form of a matrix, and a scanning driver and a data driver which are connected to the display panel. Each of the pixels of the display panel comprises:
a display element luminescent when supplied with current or voltage,
a write element to be brought into conduction when impressed with scanning voltage from the scanning driver,
voltage holding means to be impressed with data voltage from the data driver by the conduction of the write element for holding the data voltage,
a drive element for energizing or deenergizing the display element in response to the input of an on/off control signal, and
pulse-width modulation control means for on/off-controlling the drive element by pulse-width-modulating the output voltage of the voltage holding means with ramp voltage having a predetermined rate of variation, the pulse-width modulation control means comprising an on-control element for turning on the drive element, and an off-control element for turning off the drive element.

Stated more specifically, the on-control element operates when impressed with a voltage in accordance with the ramp voltage to turn on the drive element, and the off-control element operates when impressed with a voltage in accordance with the sum of the data voltage and the ramp voltage to turn off the drive element. Alternatively, the on-control element operates when impressed with a voltage in accordance with the value of sum of the data voltage and the ramp voltage to turn on the drive element, and the off-control element operates when impressed with a voltage in accordance with the value of the ramp voltage to turn off the drive element.

With the display device of the active matrix drive type according to the present invention, the write element of each pixel is impressed with scanning voltage from the scanning driver during the scanning period within 1 frame period and thereby brought into conduction, whereby data voltage is applied to the voltage holding means from the data driver and held in the holding means. During the luminescence period within 1 frame period, on the other hand, ramp voltage having a predetermined rate of variation is applied to the pulse-width modulation control means, which pulse-width-modulates the output voltage (data voltage) of the voltage holding means with the ramp voltage, and the on-control element turns on the drive element according to the result. Upon lapse of a period in proportion to the data voltage, the off-control element turns off the drive element. Consequently, the display element is energized only during a period in proportion to the data voltage.

The pair of on-control element and off-control element are positioned in close proximity to each other within the same pixel and are produced by the same process at the same time. Accordingly, these two control elements involve similar variations in characteristics (e.g., in gate-source threshold level), such that even if the time for the on-control element to turn on the drive element differs due to the variation, the time for the off-control element to turn off the drive element thereafter also differs to the same extent in the same direction. It therefore follows that the period of from the time the drive element is turned on by the on-control element until the time the drive element is turned off by the off-control element is a length of time in accordance with the data voltage despite the variations involved in the characteristics of the two control elements.

With the display device of the active matrix drive type according to the invention, each pixel of the display panel has a first control element for starting to energize the display element, and a second control element for deenergizing the display element. States more specifically, when the first control element also serves to drive the display element, the first control element is provided on and connected in series with a power supply line extending from a power source for supplying electric power to the display element, is turned on when starting to energize the display element and starts to energize the display element. The second control element is turned on when deenergizing the display element and turns off the first control element to thereby deenergize the display element.

In the case where the first control element and the second control element comprise a first transistor and a second transistor, respectively, the first transistor serves as a drive transistor for driving the display element. Accordingly, the first transistor can be made to operate in either one of the linear region (nonsaturation region) and the saturation region by altering the cathode potential of the display element. When the drive transistor is operated in the saturation region, variations in the characteristics of the drive transistor exert a great influence on the duration of energization of the display element, whereas if the drive transistor comprises the first transistor, the first transistor and the second transistor for controlling the duration of energization of the display element each have the characteristics variations offset by those of the other. The first transistor can therefore be made to operate not only in the linear region but also in the saturation region.

The first control element, which is provided on and positioned in series with the power supply line extending from a power source for supplying electric power to the display element, on/off-controls the energization of the display element, so that the current from the power source flows only through the power supply line for energization. Flow of useless current is thus avoidable.

With the display device of the active matrix drive type according to the invention, the control circuit of each pixel has a first control element for starting to energize the display element, a second control element for deenergizing the display element, and luminescence period adjusting means for adjusting the luminescence period of the display element by controlling the time to turn on the first control element or the time to turn on the second control element, in accordance with the voltage at one terminal of the display element at the time when luminescence is started.

Every frame period, the luminescence period adjusting means lengthens the luminescence period of the display element when the voltage across the terminals of the display element increases at the time when the luminescence is started, and shortens the luminescence period of the display element when the voltage across the terminals diminishes. Consequently, irrespective of temperature variations of the display element or alterations thereof with time, the quantity of luminescence of the display element within 1 frame becomes proportional to the data voltage to absorb variations in the characteristics of the display element.

With the display device of the active matrix drive type according to the invention, the duration of energization of the display element of each pixel is accurately in proportion to the data voltage despite variations in the characteristics of the transistors constituting each pixel. This eliminates display irregularities to be otherwise produced to provide images of high quality. The display device embodying the invention serves to suppress occurrence of ineffective electric power to achieve a reduction in power consumption.

### BRIEF DESCRIPTION OF THE DRAWINGS

FIG. 1 is a block diagram showing the construction of an organic EL display device of the invention;
FIG. 2 is a diagram showing the circuit construction of a pixel according to a first embodiment;
FIG. 3 is a waveform diagram showing the operation of the circuit construction;
FIG. 4 is a diagram showing the circuit construction of a pixel according to a second embodiment;
FIG. 5 is a waveform diagram showing the operation of the circuit construction;
FIG. 6 is a diagram showing the circuit construction of a pixel according to a third embodiment;
FIG. 7 is a waveform diagram showing the operation of the circuit construction;
FIG. 8 is a waveform diagram showing the operation of a fourth embodiment;
FIG. 9 is a waveform diagram showing the operation of a fifth embodiment;
FIG. 10 is a block diagram showing the construction of an organic EL display device according to a sixth embodiment;
FIG. 11 is a diagram showing the circuit construction of a pixel according to the sixth embodiment;
FIG. 12 is a waveform diagram showing the operation of the circuit construction;
FIG. 13 is a diagram showing the circuit construction of a pixel according to a seventh embodiment;
FIG. 14 is a waveform diagram showing the operation of the circuit construction;
FIG. 15 is a diagram showing the circuit construction of a pixel according to an eighth embodiment;
FIG. 16 is a waveform diagram showing the operation of the circuit construction;
FIG. 17 is a diagram showing the circuit construction of a plurality of pixels according to a ninth embodiment;
FIG. 18 is a waveform diagram showing the operation of the circuit construction;
FIG. 19 is a diagram showing the circuit construction of a pixel according to a tenth embodiment;
FIG. 20 is a waveform diagram showing the operation of the circuit construction;
FIG. 21 is a waveform diagram showing the same in the case where data voltage alters;
FIG. 22 is a diagram showing the circuit construction of a pixel according to an 11th embodiment;
FIG. 23 is a waveform diagram showing the operation of the circuit construction;
FIG. 24 is a diagram showing the circuit construction of a pixel according to a 12th embodiment;
FIG. 25 is a waveform diagram showing the operation of the circuit construction;
FIG. 26 is a waveform diagram showing the same in the case of an altered data voltage;
FIG. 27 is a waveform diagram for illustrating a correction operation when the characteristics of the organic EL element of the circuit construction altered or shifted;
FIG. 28 is a diagram showing the circuit construction of a pixel according to a 13th embodiment;
FIG. 29 is a waveform diagram showing the operation of the circuit construction;
FIG. 30 is a diagram showing the circuit construction of a pixel according to a 14th embodiment;
FIG. 31 is a waveform diagram showing the operation of the circuit construction;
FIG. 32 is a diagram showing the circuit construction of a pixel according to a 15th embodiment;
FIG. 33 is a diagram showing the circuit construction of a pixel according to a 16th embodiment;
FIG. 34 is a waveform diagram showing the operation of the circuit construction;
FIG. 35 is a diagram showing the circuit construction of a pixel according to a 17th embodiment;
FIG. 36 is a diagram showing the circuit construction of a pixel according to an 18th embodiment;
FIG. 37 is a waveform diagram showing the operation of the circuit construction;
FIG. 38 is a waveform diagram showing the same in the event of the organic EL characteristics varying or shifting;
FIG. 39 is a graph showing transistor characteristics and organic EL'characteristics;
FIG. 40 is a diagram showing the circuit construction of a pixel according to a 19th embodiment;
FIG. 41 is a diagram showing the circuit construction of a pixel according to a 20th embodiment;
FIG. 42 is a diagram showing the circuit construction of a pixel according to a 21st embodiment;
FIG. 43 is a diagram showing the circuit construction of a pixel according to a 22nd embodiment;
FIG. 44 is a diagram showing the circuit construction of a pixel according to a 23rd embodiment;
FIG. 45 is a waveform diagram showing the operation of the circuit construction;
FIG. 46 is a diagram showing the circuit construction of a pixel according to a 24th embodiment;
FIG. 47 is a waveform diagram showing the operation of the circuit construction;
FIG. 48 is a diagram showing the circuit construction of a pixel according to a 25th embodiment;
FIG. 49 is a waveform diagram showing the operation of the circuit construction;
FIG. 50 is a diagram showing various waveforms of ramp voltages;
FIG. 51 is a diagram showing the circuit construction of a pixel in a conventional organic EL display device;
FIG. 52 is a diagram showing the circuit construction of a pixel in an organic EL display device proposed by the present applicant; and
FIG. 53 is a waveform diagram showing the operation of the circuit construction.

### DETAILED DESCRIPTION OF EMBODIMENTS

Organic EL display devices embodying the present invention will be described below in detail with reference to the drawings.

### Overall Construction

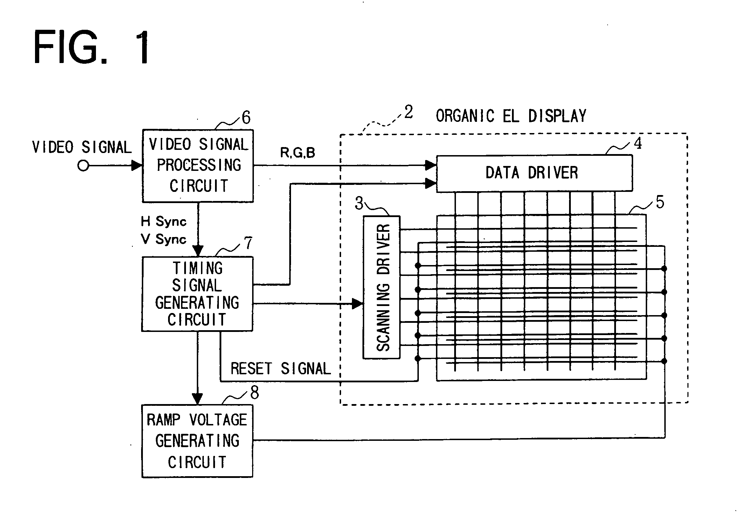

With reference to FIG. 1, an organic EL display 2 embodying the invention comprises a display panel 5 having a plurality of pixels arranged in the form of a matrix, and a scanning driver 3 and a data driver 4 which are connected to the display panel 5. A TV receiver or like video image source supplies a video signal to a video signal processing circuit 6, in which the signal is processed as required for displaying images, and the resulting video signals of RGB three primary colors are fed to the data driver 4 of the display 2. The video signal processing circuit 6 also feeds a horizontal synchronizing signal Hsync and vertical synchronizing signal Vsync to a timing signal generating circuit 7. The resulting timing signal is fed to the scanning driver 3 and the data driver 4.

The timing signal obtained from the circuit 7 is fed also to a ramp voltage generating circuit 8, which produces ramp voltage for driving the EL display 2. The ramp voltage is supplied to the pixels of the display panel 5. A power source circuit (not shown) is connected to the circuits, drivers and EL display shown in FIG. 1.

### First Embodiment

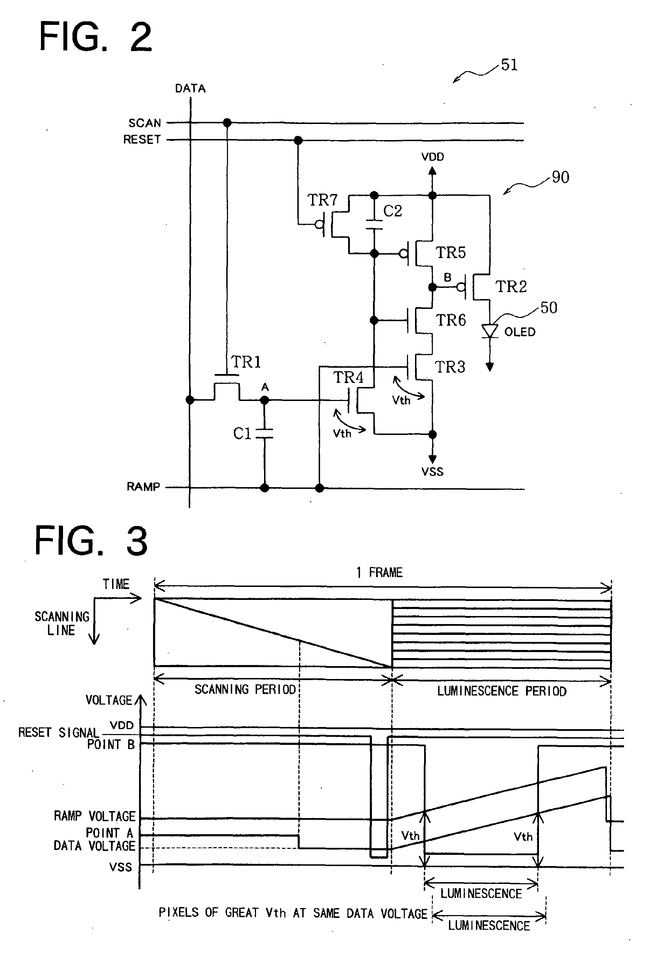

A display panel 5 comprises pixels 51 each having the circuit construction shown in FIG. 2 and arranged in the form of a matrix. Each of the pixels 51 comprises an organic EL element 50, a drive transistor TR2 for energizing or deenergizing the EL element 50 in responses to the input of an on/off control signal to the gate thereof, a write transistor TR1 to be brought into conduction when scanning voltage is applied from the scanning driver to the gate thereof, a capacitance element C1 to be impressed with data voltage from the data driver by the conduction of the write transistor TR1, and a pulse-width modulation control circuit 90 for pulse-width-modulating the output voltage of the capacitance element C1 with ramp voltage RAMP to be supplied by the ramp voltage generating circuit. The capacitance element C1 is connected at its opposite ends respectively to the drain of the write transistor TR1 and a ramp voltage supply line. The pulse-width modulation control circuit 90 comprises an on-control transistor TR3 for bringing the drive transistor TR2 into conduction and an off-control transistor TR4 for bringing the drive transistor TR2 out of conduction.

The organic EL display 2 has a power source V_{DD} of high potential and a power source V_{SS} of low potential which are provided in common for the pixels 51. Connected to the power source V_{DD} of high potential is the source of the drive transistor TR2 of each pixel 51. The on-control transistor TR3 and off-control transistor TR4 are connected in parallel with each other between the power sources V_{DD} and V_{SS}, and a pair of transistors TR5 and TR6 are connected in series with each other between the power sources. The junction B of the two transistors is connected to the gate of the drive transistor TR2.

The ramp voltage RAMP is supplied to the gate of the on-control transistor TR3. The output voltage (data voltage) of the capacitance element C1 is supplied to the gate of the off-control transistor TR4. Connected to the power source V_{DD} and the gate of the transistor TR5 are respective opposite ends of a capacitance element C2, and the source and drain of a reset transistor TR7. A reset signal line RESET is connected to the gate of the transistor TR7.

To describe the organic EL display device comprising the pixels 51 with reference to FIG. 3, the write transistor TR1 is caused to conduct by the supply of scanning voltage SCAN during the scanning period for the capacitance element C1 to store data voltage DATA (voltage at point A) therein. The reset signal RESET thereafter changes from high to low, bringing the reset transistor TR7 into conduction to set opposite ends of the capacitance element C2 for the high power source voltage V_{DD}. As a result, the transistor TR5 is brought out of conduction. At this time, the other transistors TR2, TR3, TR4 and TR6 are all nonconducting.

Subsequently during the luminescence period, the ramp voltage RAMP rises to result in an increased difference between this voltage and the low-potential power source voltage V_{SS}. Upon this difference exceeding a threshold level Vth between the gate of the on-control transistor TR3 and the source thereof, the transistor TR3 conducts. This brings the transistor TR6 into conduction, lowering the gate voltage (voltage a point B) of the drive transistor TR2 and thereby bringing the transistor TR2 into conduction. Consequently, current flows from the power source V_{DD} of high potential to the EL element 50, which starts to luminesce.

Subsequently, with a further rise in the ramp voltage, the voltage at point A rises, resulting in an increased difference of this voltage from the low-potential power source voltage V_{SS}. Upon this difference exceeding the gate-source threshold level Vth of the off-control transistor TR4, the transistor TR4 conducts to lower the gate voltage of the transistor TR6. This brings the transistor TR6 out of conduction. Simultaneously with this, the transistor TR5 conducts, increasing the gate voltage (voltage at point B) of the drive transistor TR2 and consequently bringing the transistor TR2 out of conduction to deenergize the EL element 50 and stop the luminescence.

Thus, the time to stop the luminescence of the organic EL device 50 alters in accordance with the value of the data voltage to vary the duration of luminescence in proportion to the value of the data voltage, whereby expression of multi-level gradation is realized.

With the pulse-width modulation circuit 90 described, the on-control transistor TR3 and the off-control transistor TR4 are positioned in proximity to each other within the same pixel 51, and the two transistors are produced at the same time by the same process, such that even if these transistors involve variations in the gate-source threshold level, the two transistors exhibit similar variations. Even if the time for the on-control transistor TR3 to bring the drive transistor TR2 into conduction differs due to the variation, the time for the off-control transistor TR4 to bring the drive transistor TR2 out of conduction thereafter also differs to the same extent in the same direction.

Accordingly, the period of time from the conduction of the drive transistor TR2 by the on-control transistor TR3 until the transistor TR2 is brought out of conduction by the off-control transistor TR4 is accurately in proportion to the data voltage despite the variations in the threshold level of the two transistors TR3, TR4.

The signal line extending from the power source V_{DD} of high potential to the power source V_{SS} of low potential has the pair of transistors TR5, TR6, and during the scanning period, the transistor TR5 is brought out of conduction in response to the input of a reset signal, with the transistor TR6 off. Subsequently when the transistor TR6 changes from on-state to off-state in the luminescence period, the transistor TR5 is brought into conduction at the same time to stop luminescence. Thus, during the scanning period through the luminescence period, at least one of the pair of transistors TR5, TR6 is off to block the current path from the high-potential power source V_{DD} to the low-potential power source V_{SS}. This obviates the flow of useless current from the power source V_{DD} to the power source V_{SS} to thereby reduce power consumption.

### Second Embodiment

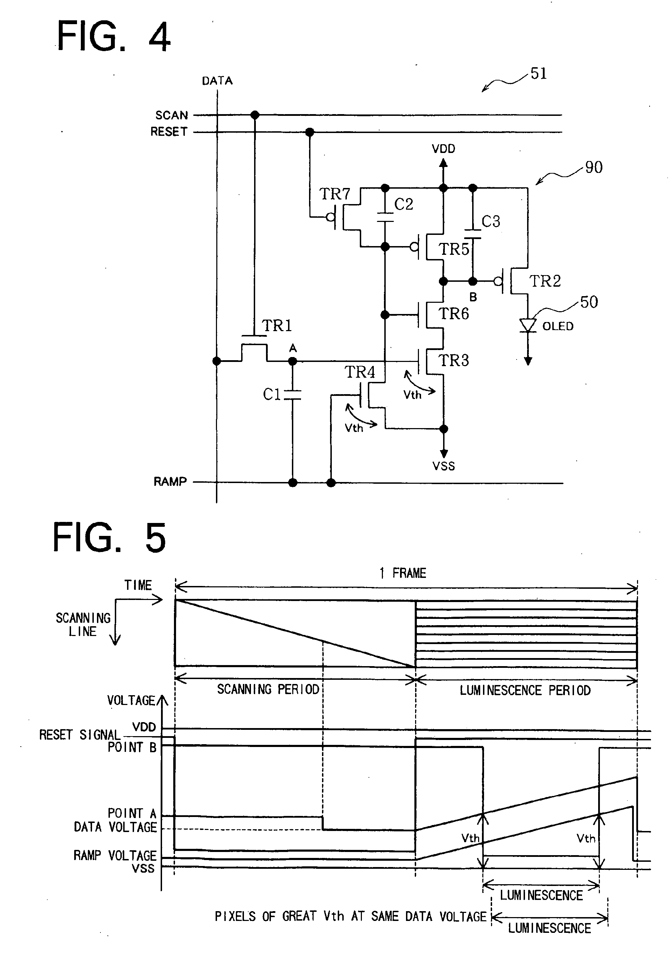

With reference to FIG. 4, the circuit construction of each pixel 51 includes a pulse-width modulation circuit 90, which comprises an on-control transistor TR3 for bringing a drive transistor TR2 into conduction and an off-control transistor TR4 for bringing the drive transistor TR2 out of conduction. The circuit construction is the same as that of the first embodiment with the exception of the following. The output voltage (data voltage) of a capacitance element C1 is supplied to the gate of the on-control transistor TR3, and ramp voltage RAMP is supplied to the gate of the off-control transistor TR4. A capacitance element C3 is connected in parallel with a transistor TR5.

With reference to FIG. 5, in the luminescence period of the organic EL display device comprising the pixel 51, the voltage at point A rises with a rise in the ramp voltage RAMP to produce an increased difference between this voltage and the low-potential power source voltage Vss. Upon the difference exceeding the gate-source threshold level Vth of the on-control transistor TR3, the transistor TR3 conducts. This brings the transistor TR6 into conduction, lowering the gate voltage (voltage a point B) of the drive transistor TR2 and thereby bringing the transistor TR2 into conduction. Consequently, current flows from the power source V_{DD} of high potential to the EL element 50, which starts to luminesce.

Subsequently, the ramp voltage further rises, producing an increased difference between this voltage and the low-potential power source voltage V_{SS}. The difference exceeds the gate-source threshold level Vth of the off-control transistor TR4, whereupon the transistor TR4 conducts to lower the gate voltage of the transistor TR6. This brings the transistor TR6 out of conduction. Simultaneously with this, the transistor TR5 conducts, increasing the gate voltage (voltage at point B) of the drive transistor TR2 and consequently bringing the transistor TR2 out of conduction to deenergize the EL element 50 and stop the luminescence.

Thus, the time to stop the luminescence of the organic EL device 50 alters in accordance with the value of the data voltage to vary the duration of luminescence in proportion to the value of the data voltage, whereby expression of multi-level gradation is realized.

With the pulse-width modulation circuit 90 described above, it is likely that the on-control transistor TR3 and the off-control transistor TR4 will involve variations in the gate-source threshold level as is the case with the first embodiment. However, the time for the on-control transistor TR3 to bring the drive transistor TR2 into conduction and the time for the off-control transistor TR4 to bring the drive transistor TR2 out of conduction thereafter will alter to the same extent in the same direction. Accordingly, the duration of conduction of the drive transistor TR2 is accurately in proportion to the data voltage despite the variations in the threshold level of the two transistors TR3, TR4.

The signal line extending from the power source V_{DD} of high potential to the power source V_{SS} of low potential has the pair of transistors TR5, TR6. During the scanning period through the luminescence period, at least one of the pair of transistors TR5, TR6 is off to block the current path from the high-potential power source V_{DD} to the low-potential power source V_{SS}. This obviates the flow of useless current from the power source V_{DD} to the power source V_{SS} to thereby reduce power consumption.

### Third Embodiment

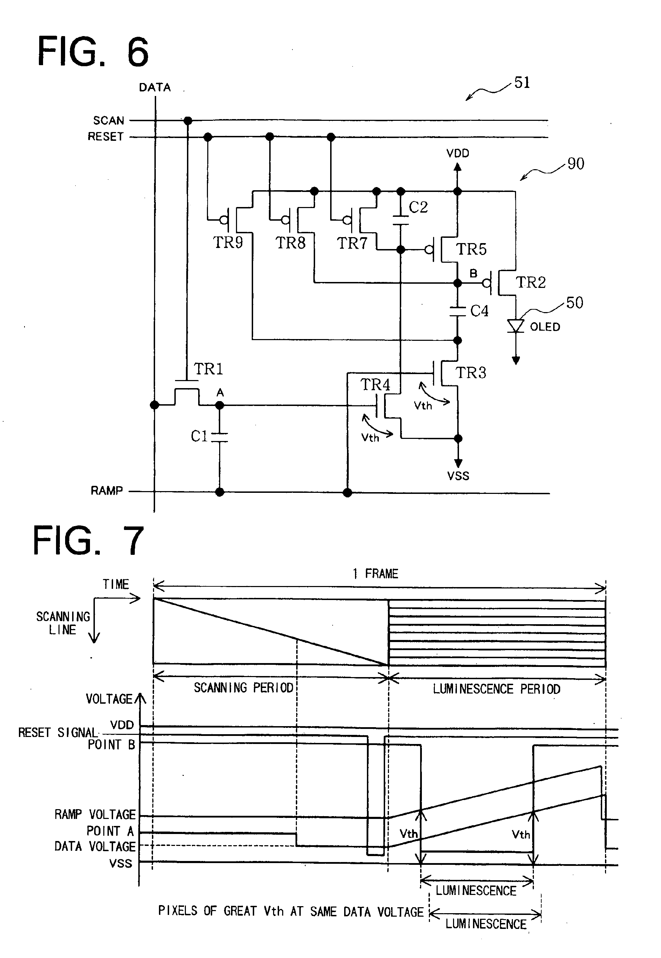

With reference to FIG. 6, the circuit construction of each pixel 51 includes a pulse-width modulation circuit 90, which comprises an on-control transistor TR3 for bringing a drive transistor TR2 into conduction and an off-control transistor TR4 for bringing the drive transistor TR2 out of conduction. The organic EL display 2 has a power source V_{DD} of high potential and a power source V_{SS} of low potential which are provided in common for the pixels 51. Connected to the power source V_{DD} of high potential is the source of the drive transistor TR2 of each pixel 51. The on-control transistor TR3 and off-control transistor TR4 are connected in parallel with each other between the power sources V_{DD} and V_{SS}, and a transistor TR5 and a capacitance element C4 are connected in series with each other between the power sources. The junction B of the transistor TR5 and the capacitance element C4 is connected to the gate of the drive transistor TR2.

Ramp voltage RAMP is supplied to the gate of the on-control transistor TR3. The output voltage (data voltage) of a capacitance element C1 is supplied to the gate of the off-control transistor TR4. Connected to the power source V_{DD} of high potential and the gate of the transistor TR5 are respective opposite ends of a capacitance element C2, and the source and drain of a reset transistor TR7. A reset signal line RESET is connected to the gate of the transistor TR7.

A reset transistor TR8 has its source and drain connected respectively to the high-potential power source V_{DD} and one end (point B) of the capacitance element C4. The reset signal line RESET is connected to the gate of the transistor TR8. A reset transistor TR9 has its source and drain connected respectively to the high-potential power source V_{DD} and the other end of the capacitance element C4. The reset signal line RESET is connected to the gate of the transistor TR9.

With reference to FIG. 7, during the scanning period of the organic EL display device comprising the pixels 51, a write transistor TR1 is caused to conduct by the supply of scanning voltage SCAN for the capacitance element C1 to store data voltage DATA (voltage at point A) therein. The reset signal RESET thereafter changes from high to low, bringing the three reset transistors TR7, TR8 and TR9 into conduction to set opposite ends of the capacitance element C2 for the high potential V_{DD}, and opposite ends of the capacitance element C4 for the high-potential power source voltage V_{DD}. As a result, the transistor TR5 is brought out of conduction. At this time, the other transistors TR2, TR3, TR4 are all nonconducting.

Subsequently during the luminescence period, the ramp voltage RAMP rises to result in an increased difference between this voltage and the low-potential power source voltage V_{SS}. Upon the difference exceeding the gate-source threshold level Vth of the on-control transistor TR3, the transistor TR3 conducts. This lowers the potential across opposite ends of the capacitance element C4, and a drop in the gate voltage (voltage at point B) brings the drive transistor TR2 into conduction. Consequently, current flows from the power source V_{DD} of high potential to the EL element 50, which starts to luminesce. Incidentally, the transistor TR5 has its gate voltage held at a high potential by the capacitance element C2 and remains nonconducting.

Subsequently, with a further rise in the ramp voltage, the voltage at point A rises, producing an increased difference between this voltage and the low-potential power source voltage V_{SS}*.* The difference exceeds the gate-source threshold level Vth of the off-control transistor TR4, whereupon the transistor TR4 conducts to lower the gate voltage of the transistor TR5. This brings the transistor TR5 into conduction. As a result, the gate voltage (voltage at point B) of the drive transistor TR2 rises to bring the transistor TR2 out of conduction, deenergize the EL element 50 and stop the luminescence.

Thus, the time to stop the luminescence of the organic EL device 50 alters in accordance with the value of the data voltage to vary the duration of luminescence in proportion to the value of the data voltage, whereby expression of multi-level gradation is realized.

With the pulse-width modulation circuit 90 described, even if the on-control transistor TR3 and the off-control transistor TR4 involve variations in the gate-source threshold level as is the case with the first and second embodiments, the duration of conduction of the drive transistor TR2 accurately corresponds to the data voltage. The signal line extending from the power source V_{DD} of high potential to the power source V_{SS} of low potential has the capacitance element C4, so that during the scanning period through the luminescence period, no useless current flows from the power source V_{DD} and to the power source V_{SS} to thereby reduce power consumption.

### Fourth Embodiment

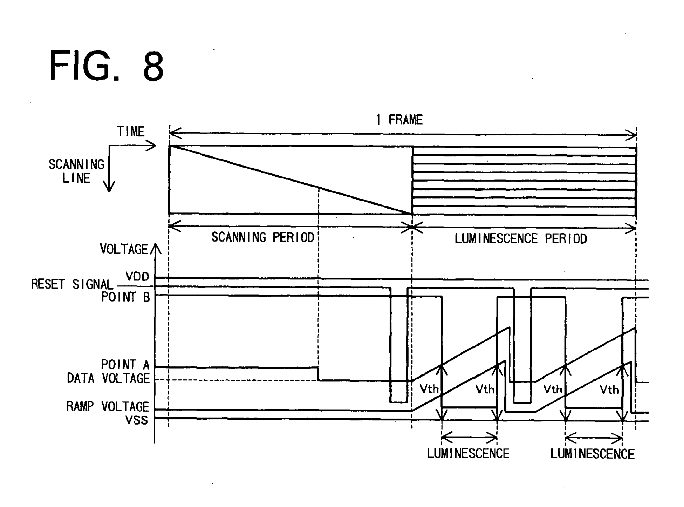

The circuit construction of each pixel 51 according to this embodiment is the same as that of the first, second or third embodiment, whereas ramp voltage is produced twice, i.e., in the first half and second half of the luminescence period as shown in FIG. 8. In this way, luminescence can be effected separately in the first half and the in the second half. This serves to suppress a color flicker (the phenomenon that an object moving at a high speed exhibits a color change at its edge) due to differences in the luminescence time of images of R, G, B.

### Fifth Embodiment

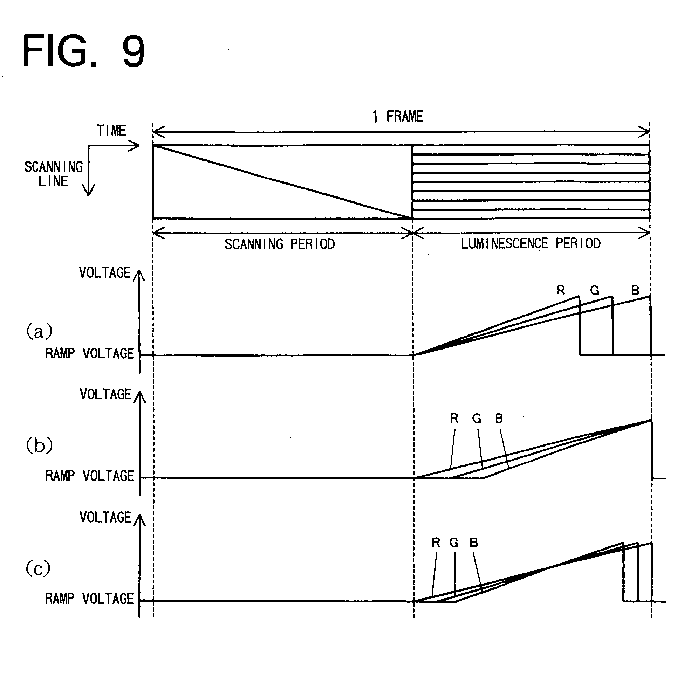

The circuit construction of each pixel 51 according to this embodiment is the same as that of the first, second or third embodiment, whereas ramp voltages which are different in slope are supplied for pixels of three primary colors (R, G, B) as shown in FIG. 9, (a) to (c).

Thus, ramp voltages of different slopes are used for the respective pixels of R, G, B, whereby the white balance is adjustable without altering the data voltage. Furthermore, the three patterns of FIG. 9, (a), (b), (c) are changed over for every frame, whereby a color flicker (the phenomenon that an object moving at a high speed exhibits a color change at its edge) due to differences in the luminescence time of images of R, G, B can be suppressed.

### Sixth Embodiment

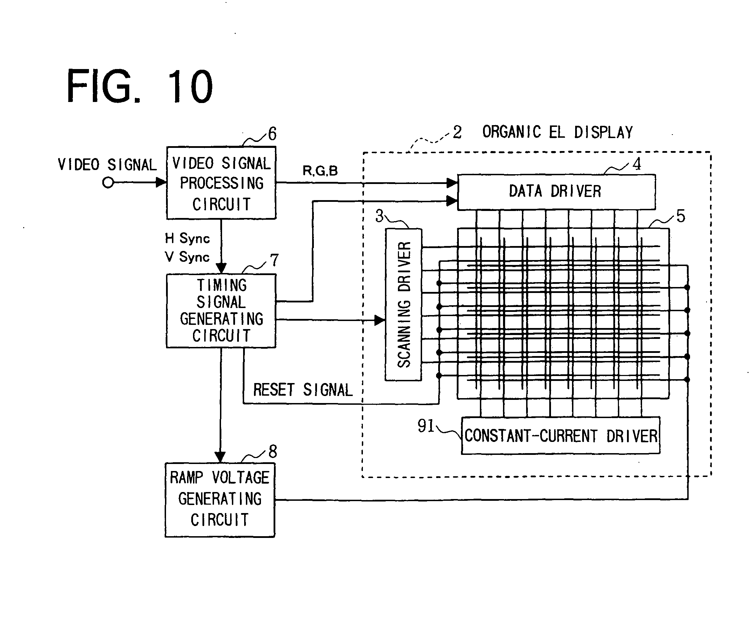

FIG. 10 shows this embodiment, i.e., an organic EL display device comprising a display panel 5, a constant-current driver 91 connected to the display panel 5 for causing a constant current to flow through the organic EL elements 50 of respective pixels by a current program circuit to be described later, and a pulse-width modulation control circuit for controlling the energization of the organic EL element 50.

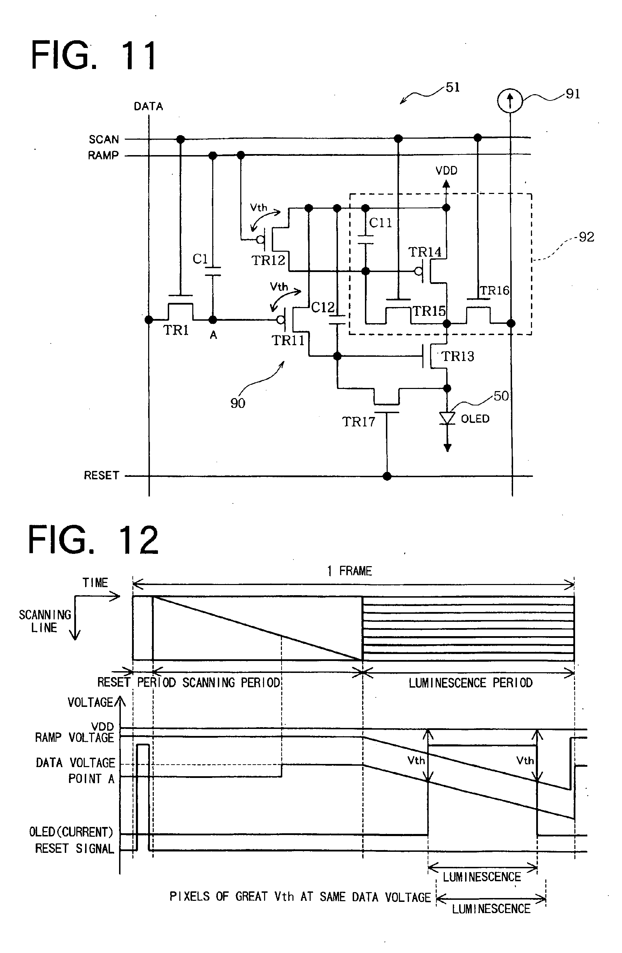

In the EL display device, the pulse-width modulation control circuit 90 constituting each of pixels 51 has the constant-current driver 91 connected thereto via a current program circuit 92 as shown in FIG. 11. The control circuit 90 comprises an on-control transistor TR11 for causing a current-on transistor TR13 to conduct, and an off-control transistor TR12 for bringing out of conduction a transistor TR14 constituting the current program circuit 92. The current-on transistor TR13 is connected to a power source V_{DD} via the transistor TR14 constituting the current program circuit 92.

Connected to the power source V_{DD} and the gate of the transistor TR14 are respective opposite ends of a capacitance element C11 and the source and drain of the off-control transistor TR12. Further connected to the power source V_{DD} and the gate of the current-on transistor TR13 are respective opposite ends of a capacitance element C12 and the source and drain of the on-control transistor TR11.

A junction of the capacitance element C11 and the drain of the off-control transistor TR12 is connected to the constant-current driver 91 via transistors TR15 and TR16. A junction of the transistors TR15 and TR16 is connected to the drain of the current-on transistor TR13. A junction of the gate of the current-on transistor TR13 and the drain of the on-control transistor TR11 is connected to a junction of the current-on transistor TR13 and the organic EL element 50 via a transistor TR17, to the gate of which is connected a resent signal line RESET.

With EL display device comprising the pixel 51, a reset signal RESET supplied brings the transistor TR17 into conduction first during a reset period as shown in FIG. 12 to bring the current-on transistor TR13 out of conduction. At this time, transistors TR1, TR11, TR12, TR14, TR15 and TR16 are nonconducting.

During the subsequent scanning period, the supply of scanning voltage SCAN brings the write transistor TR1 into conduction to store data voltage DATA (voltage at point A) in a capacitance element C1. The transistors TR15 and TR16 are also brought into conduction, and the transistor TR14 of the current program circuit 12 is gradually initiated into conduction. As a result, a programmed current starts to flow from the power source V_{DD} toward the current driver 91 via the transistors TR14 and TR16, eventually ensuring a gate voltage for the transistor TR14. A charge corresponding to the programmed current is stored in the capacitance element C11.

The gate voltage of the on-control transistor TR11 drops with a drop in ramp voltage RAMP during the subsequent luminescence period, producing an increased difference from the power source voltage V_{DD}. Upon the difference exceeding the gate-source threshold level of the on-control transistor TR11, this transistor TR11 conducts, consequently bringing the current-on transistor TR13 into conduction and causing programmed current to flow from the power source V_{DD} to the EL element 50 via the transistors TR14 and TR13 to start luminescence.

The ramp voltage further drops to produce an increased difference from the power source voltage V_{DD}. Upon the difference exceeding the gate-source threshold level of the off-control transistor TR12, the transistor TR12 conducts, and the transistor TR14 of the current program circuit 92 is brought out of conduction. Consequently, the EL element 50 is deenergized to stop luminescence.

Thus, the time to start the luminescence of the organic EL device 50 alters in accordance with the value of the data voltage to vary the duration of luminescence in proportion to the value of the data voltage, whereby expression of multi-level gradation is realized.

With the pulse-width modulation circuit 90 described, the duration of energization of the organic EL element 50 accurately corresponds to the data voltage despite the variations to be involved in the gate-source threshold levels of the on-control transistor TR11 and the off-control transistor TR12. The current from the power source V_{DD} flows through the EL element 50 only during a period of time also corresponding to the data voltage. This obviates the flow of useless current to thereby reduce power consumption.

### Seventh Embodiment

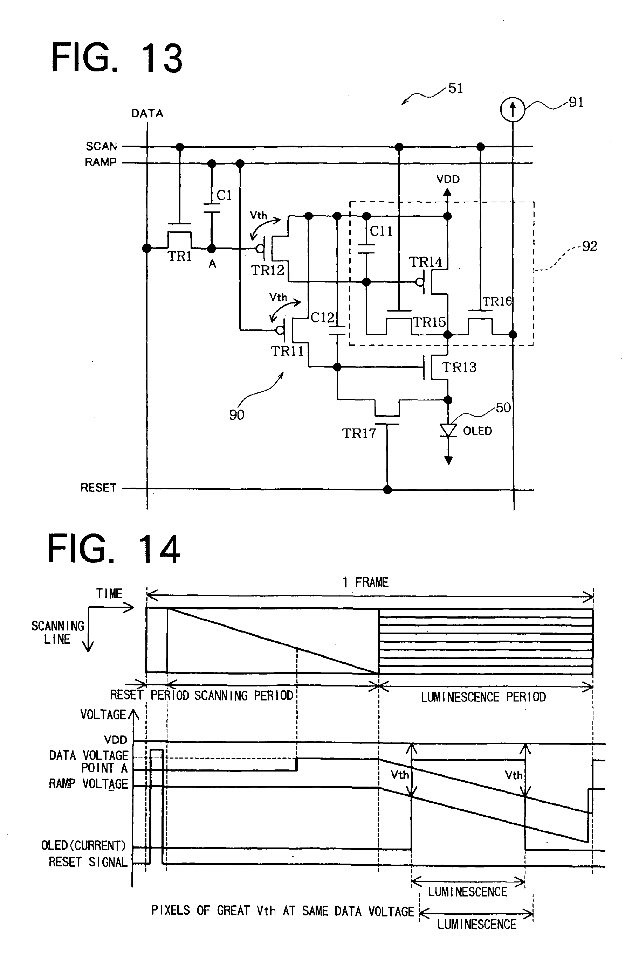

With reference to FIG. 13, the circuit construction of each of pixels 51 includes a pulse-width modulation circuit 90, which comprises an on-control transistor TR11 and an off-control transistor TR12. The circuit construction is the same as that of the sixth embodiment except that ramp voltage RAMP is supplied to the gate of the on-control transistor TR11, and that the output voltage (data voltage) of a capacitance element C1 is supplied to the gate of the off-control transistor TR12.

With reference to FIG. 14 showing the operation of the EL display device comprising the pixel 51, the gate voltage of the on-control transistor TR11 drops with a drop in the ramp voltage RAMP during the luminescence period, producing an increased difference from the power source voltage V_{DD}. Upon the difference exceeding the gate-source threshold level of the on-control transistor TR11, this transistor TR11 conducts, consequently bringing the current-on transistor TR13 into conduction and causing current to flow from the power source V_{DD} to the EL element 50 via the transistors TR14 and TR13 to start luminescence.

The ramp voltage further drops to produce an increased difference from the power source voltage V_{DD}. Upon the difference exceeding the gate-source threshold level of the off-control transistor TR12, the transistor TR12 conducts, and the transistor TR14 of the current program circuit 92 is brought out of conduction. Consequently, the EL element 50 is deenergized to stop luminescence.

Thus, the time to stop the luminescence of the organic EL device 50 alters in accordance with the value of the data voltage to vary the duration of luminescence in proportion to the value of the data voltage, whereby expression of multi-level gradation is realized. With the pulse-width modulation circuit 90 described, the duration of energization of the organic EL element 50 accurately corresponds to the data voltage. The current from the power source V_{DD} flows through the EL element 50 only during a period of time also corresponding to the data voltage. This obviates the flow of useless current to thereby reduce power consumption.

### Eighth Embodiment

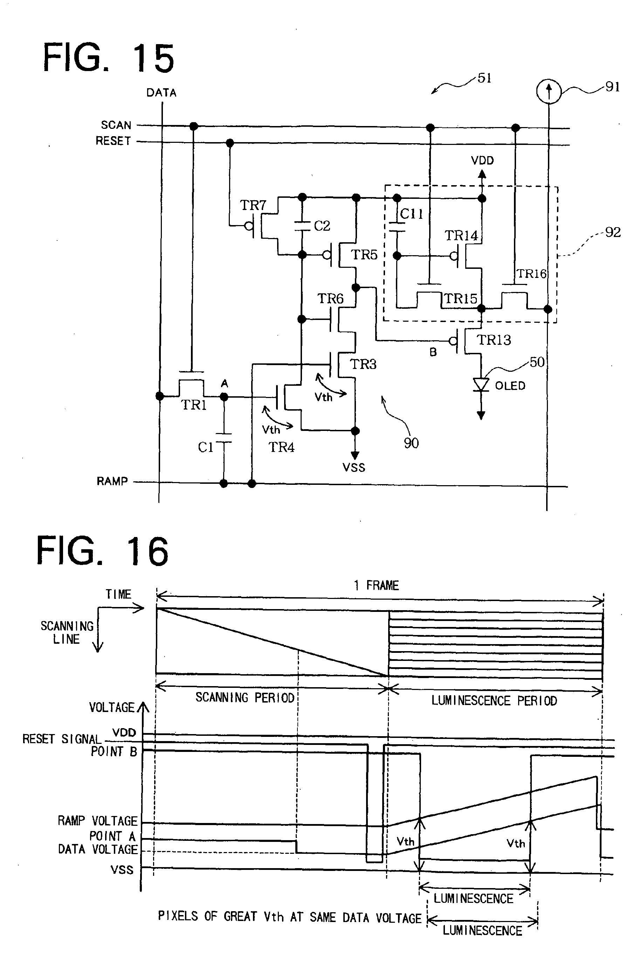

With reference to FIG. 15, the circuit construction of each pixel 51 of this embodiment comprises the pulse-width modulation circuit 90 of the first embodiment shown in FIG. 2, and the current program circuit 92 shown in FIG. 11 and connected to the circuit 90. This embodiment operates in the same manner as the first embodiment as shown in FIG. 16 to control the energization of the organic EL element 50.

### Ninth Embodiment

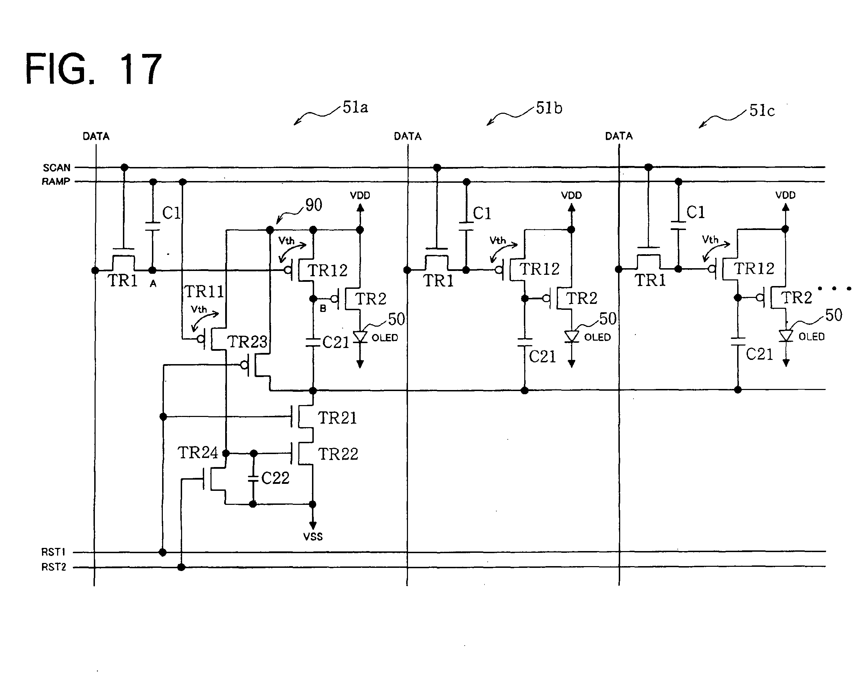

With reference to FIG. 17, this embodiment, i.e., an organic EL display device, comprises pixels 51 which are divided into groups of pixels 51a, 51b, 51c which are adjacent to one another. One of the adjacent pixels, i.e., the pixel 51a, has a circuit construction incorporating a pulse-width modulation circuit 90, while the other pixels 51b, 51c have a circuit construction incorporating only part of the circuit 90. The pixels 51a, 51b, 51c of the same pixel group are in common with respect to the other circuit portion.

The pulse-width modulation control circuit 90 incorporated in the pixel 51a comprises an on-control transistor TR11 for bringing a drive transistor TR2 into conduction and an off-control transistor TR12 for bringing the drive transistor TR2 out of conduction. The pixel 51a has connected thereto a power source V_{DD} of high potential and a power source V_{SS} of low potential. An organic EL element 50 is connected to the power source V_{DD} of high potential via the drive transistor TR2.

The on-control transistor TR11 and off-control transistor TR12 are connected in parallel with each other between the power sources V_{DD} and V_{SS}, and a capacitance element C21 and two transistors TR21 and TR22 in series therewith are connected between the power sources. A junction B of the off-control transistor TR12 and the capacitance element C21 is connected to the gate of the drive transistor TR2. The high-potential power source V_{DD} is connected to the drain of a transistor TR21 via a transistor TR23. A first reset signal line RST1 is connected to the gates of the two transistors TR23, TR21.

A transistor TR24 has a drain and a source which are connected respectively to the gate of the transistor TR22 and the low-potential power source V_{SS}. A second reset signal line RST2 is connected to the gate of the transistor TR24. Ramp voltage RAMP is supplied to the gate of the on-control transistor TR11. The output voltage (data voltage) of a capacitance element C1 is supplied to the gate of the off-control transistor TR12.

On the other hand, only the off-control transistor TR12 and the capacitance element C21, which are components of the pulse-width modulation control circuit 90, are provided in each of the pixels 51b, 51c adjacent to the pixel 51a. The capacitance elements C21 of the respective pixels are connected to one another at their low-potential side.

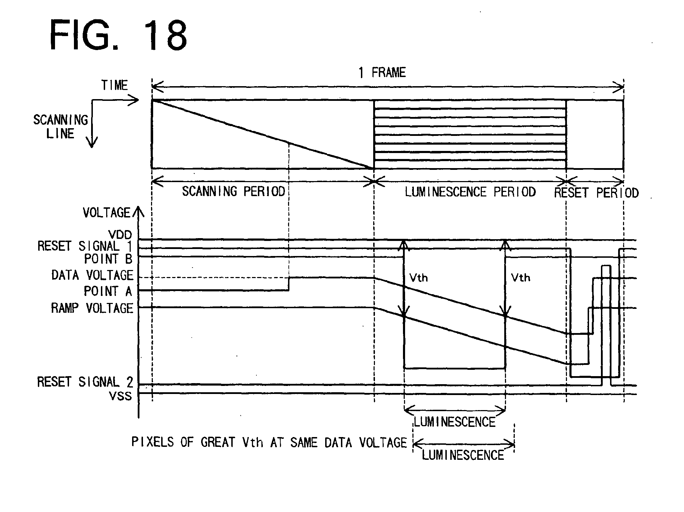

With the organic EL display device comprising the pixels 51a, 51b, 51c, the write transistor TR1 of each pixel is brought into conduction by the supply of scanning voltage SCAN during the scanning period, and a charge corresponding to data voltage (voltage at point A) is stored in the capacitance element C1 to write data thereto as shown in FIG. 18. Incidentally at this time, the transistors TR2, TR11, TR12, TR21, TR22, TR23 and TR24 are all nonconducting.

Subsequently during the luminescence period, the ramp voltage RAMP drops to result in an increased difference between this voltage and the high potential V_{DD}. Upon the difference exceeding the gate-source threshold level Vth of the on-control transistor TR11, the transistor TR11 conducts. This brings the transistor TR22 into conduction and the transistor TR21 also into conduction at the same time to lower the voltage across opposite ends of the capacitance elements C21 in the pixels. Consequently, the drive transistor TR2 of each pixel is brought into conduction, causing current to flow from the power source V_{DD} of high potential to the EL element 50, which starts to luminesce.

Subsequently, with a further drop in the ramp voltage, the voltage at point A drops, producing an increased difference between this voltage and the high potential V_{DD}. The difference exceeds the gate-source threshold level Vth of each off-control transistor TR12, whereupon the transistor TR12 conducts to raise the voltage at point B. As a result, the drive transistor TR2 is brought out of conduction to deenergize the EL element 50 and stop the luminescence.

In the subsequent reset period, the first reset signal RST1 changes from high to low, whereby the transistor TR23 is brought into conduction. At the same time, the transistor TR21 is brought out of conduction, and the potential at the junction of the transistor TR21 and the capacitance elements C21 of the pixels rises to set the opposite ends of the capacitance elements C21 for the high potential.

When the ramp voltage then rises to the high level, the on-control transistor TR11 and the off-control transistor TR12 are brought out of conduction. Subsequently, the second reset signal RST2 becomes high only for a specified period of time, whereby the transistor TR24 is brought into conduction and the transistor TR22 is brought out of conduction. The first reset signal RST1 thereafter changes to high, thereby bringing the transistor TR23 out of conduction. This mode of control prevents current from straightforwardly flowing between the two power sources V_{DD} and V_{SS}*.*

With the organic EL display device described above, the pixel 51a among pixels 51a, 51b, 51c which are adjacent to one another has the pulse-width modulation control circuit 90 in its entirety, whereas the other pixels 51b, 51c each have only some components of the circuit 90. This construction serves to reduce the number of transistors in the entire display panel, consequently improving the opening ratio of the display panel and yield.

### Tenth Embodiment

The drive transistor included in the first to ninth embodiments is omitted from this embodiment, and an on-control transistor (the first transistor to be described below) serves both to drive an organic EL element 50 and to control the energization of the organic EL element 50.

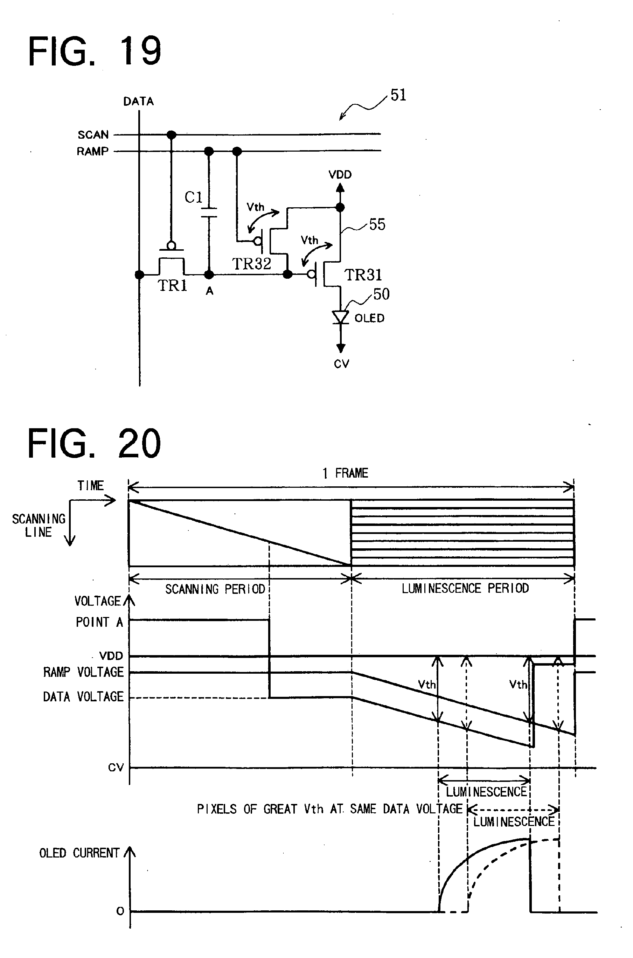

With reference to FIG. 19, each of pixels 51 has an organic EL element 50, a write transistor TR1 of the p-channel type having a gate to be impressed with scanning voltage SCAN, a capacitor C1 to be impressed with data voltage DATA by the conduction of the write transistor TR1 for holding the voltage, a first transistor TR31 of the p-channel type provided in series with a power supply line 55 extending from a power supply V_{DD} to the EL element 50 and to be brought into conduction upon the difference between the gate voltage thereof and the power source voltage V_{DD} exceeding a predetermined threshold value Vth, and a second transistor TR32 of the p-channel type to be brought into conduction upon the difference between the gate voltage thereof and the power source voltage V_{DD} exceeding a predetermined threshold value Vth to bring the first transistor TR31 out of conduction. Applied to the gate of the first transistor TR31 is a voltage (voltage at point A) corresponding to the sum of ramp voltage RAMP and the output voltage of the capacitor. The ramp voltage RAMP is applied to the gate of the second transistor TR32.

With reference to FIG. 20, the write transistor TR1 is brought into conduction by the application of the scanning voltage SCAN in the first-half scanning period of 1 frame, whereupon the potential at point A is set for the data voltage to charge the capacitor C1. Subsequently when the ramp voltage RAMP gradually drops in the second-half luminescence period of 1 frame, the voltage at point A also gradually drops along with the ramp voltage at the same rate of reduction. Upon the difference between the power source voltage V_{DD} and the data voltage consequently exceeding the threshold value Vth of the first transistor TR31, this transistor TR31 conducts, starting to energize the EL element 50 from the power source V_{DD}. As a result, the current flowing through the EL element 50 gradually increases as seen in FIG. 20, causing the element %50 to luminesce.

Upon the difference between the power source voltage V_{DD} and the ramp voltage RAMP thereafter exceeding the threshold value Vth of the second transistor TR32, the second transistor TR32 conducts, with the result that the potential at point A increases toward the power source voltage V_{DD} to bring the first transistor TR31 out of conduction. As a result, the supply of current to the EL element 50 from the power source V_{DD} is discontinued to stop the luminescence of the element 50. When 1 frame completion time is reached, the ramp voltage resumes the original value, permitting the voltage at point A to also resume the original value, followed by the operation for the next frame.

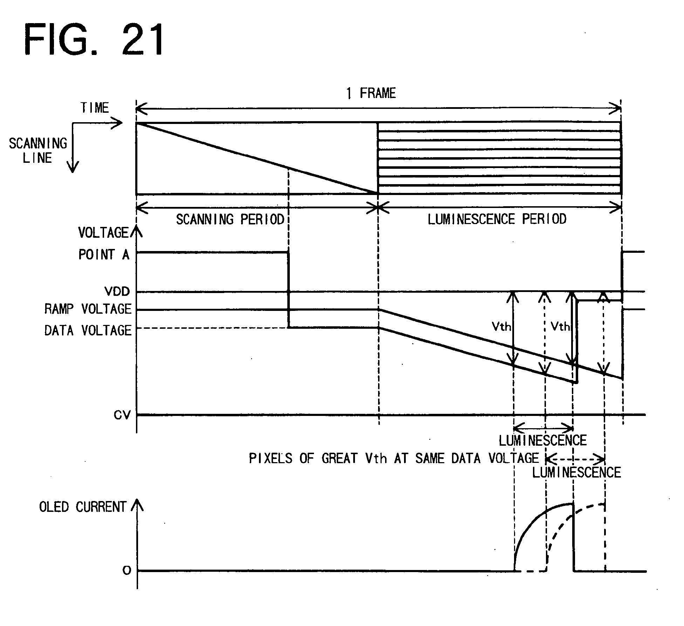

FIG. 21 shows variations in voltages and variations in the current flowing through the organic EL element 50 in the event of the data voltage altering. The luminescence period of the EL element 50 thus varies with the variation of the data voltage, whereby multi-level gradation of images is expressed. For example when the threshold value of the first transistor TR31 involves a positive variation, the time to start the luminescence of the EL element 50 is delayed as indicated in broken lines in FIGS. 20 and 21, but since the time to stop the luminescence is also delayed by the same length of time, the luminescence period of the EL element 50 is of the same length corresponding to the data voltage despite the variation in the threshold values of the two transistors TR31, TR32. This obviates display irregularities to show images of high quality.

Further the first transistor TR31 can be made to operate in either one of the linear region and the saturation region by altering the cathode potential CV of the EL element 50. By allowing the first transistor TR31 to operate in the linear region, it is possible to ensure reduced power consumption, while the first transistor TR31 can be made less susceptible to the influence of temperature or alterations with time when allowed to operate in the saturation region.

Further because the first transistor TR31 is provided on the power supply line 55 in series therewith for energizing or deenergizing the organic EL element 50, the current from the power source V_{DD} flows only through the supply line 55. This serves to obviates waste of current. Incidentally, the write transistor TR1 need not always be of the p-channel type, but can be of the n-channel type, or can be a CMOS switch comprising a n-channel circuit and a p-channel circuit as connected in parallel with each other.

### 11th Embodiment

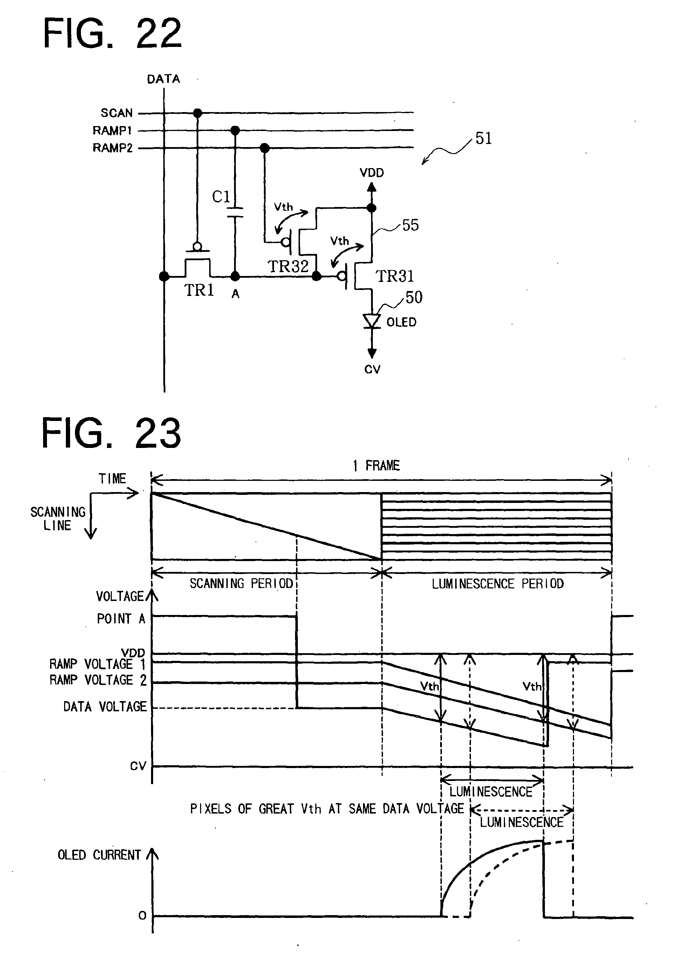

With reference to FIG. 22, each pixel 51 has an organic EL element 50, a write p-channel transistor TR1, a capacitor C1 to be caused to hold data voltage DATA therein by the conduction of the write transistor TR1, a first p-channel transistor TR31 provided in series with a power supply line 55 and to be brought into conduction upon the difference between the gate voltage thereof and power source voltage V_{DD} exceeding a predetermined threshold value Vth, and a second p-channel transistor TR32 to be brought into conduction upon the difference between the gate voltage thereof and the power source voltage V_{DD} exceeding a predetermined threshold value Vth to bring the first transistor TR31 out of conduction. The present embodiment is the same as the tenth embodiment in this construction. However, two kinds of ramp voltages RAMP1 and RAMP2 which are different in rate of variation are supplied to each pixel 51. A capacitor C1 is interposed between a line for supplying the first ramp voltage RAMP1 and point A, and the second ramp voltage RAMP2 is applied to the gate of the second transistor TR32.

With reference to FIG. 23, the voltage at point A drops with a drop in the first ramp voltage RAMP1 in the luminescence period. In the case where the capacitor C1 has a small capacitor, the rate of drop of the voltage at point A is smaller than that of the ramp voltage RAMP1. Accordingly, the second ramp voltage RAMP2 is prepared which is the same as the voltage at point A in variation rate, and is applied to the gate of the second transistor TR32 to thereby obtain a luminescence period in accordance with the data voltage.

### 12th Embodiment

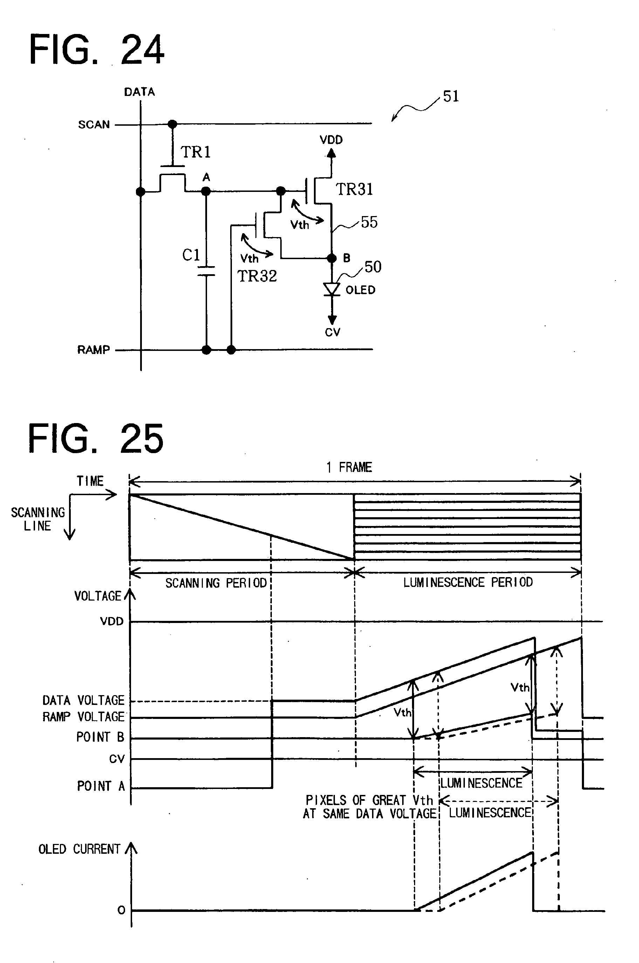

FIG. 24 shows a pixel 51 having a write transistor TR1, first transistor TR31 and second transistor TR32, each of which is an n-channel transistor. The first transistor TR31 and the second transistor TR32 are connected to point B so as to be brought into conduction upon the difference between the gate voltage and the high-potential-side terminal voltage (voltage at point B) of an organic EL element 50 exceeding a predetermined threshold value. A voltage (voltage at point A) corresponding to the sum of ramp voltage RAMP and the output of a capacitor C1 is applied to the gate of the first transistor TR31. The ramp voltage RAMP is applied to the gate of the second transistor TR32.

With reference to FIG. 25, the write transistor TR1 is brought into conduction by the application of scanning voltage SCAN during the scanning period, whereupon the potential at point A is set for data voltage, whereby the capacitor C1 is charged. During the subsequent luminescence period, the ramp voltage RAMP gradually rises, and the voltage at point A also gradually rises with the ramp voltage at the same rate. Consequently, upon the difference between the voltage at point B and the data voltage exceeding the threshold value Vth of the first transistor TR31, the first transistor TR31 conducts, permitting a power supply V_{DD} to start to energize the EL element 50. As a result, the current flowing through the EL element 50 gradually increases as shown in FIG. 25, causing the EL element 50 to luminesce. Incidentally in the circuit construction shown in FIG. 25, the potential at point B rises with an increase in the current flowing through the EL element 50.

When the difference between the voltage at point B and the ramp voltage RAMP thereafter exceeds the threshold value Vth of the second transistor TR32, the second transistor TR32 conducts, thereby causing the potential at point A to drop toward the potential at point B to bring the first transistor TR31 out of conduction. As a result, the power source V_{DD} stops energizing the organic EL element 50 to stop the luminescence of the element 50. Upon completion of 1 frame period, the ramp voltage returns to the original level, and the voltage at point A also resumes the original level along with the ramp voltage. An operation for the next frame then follows.

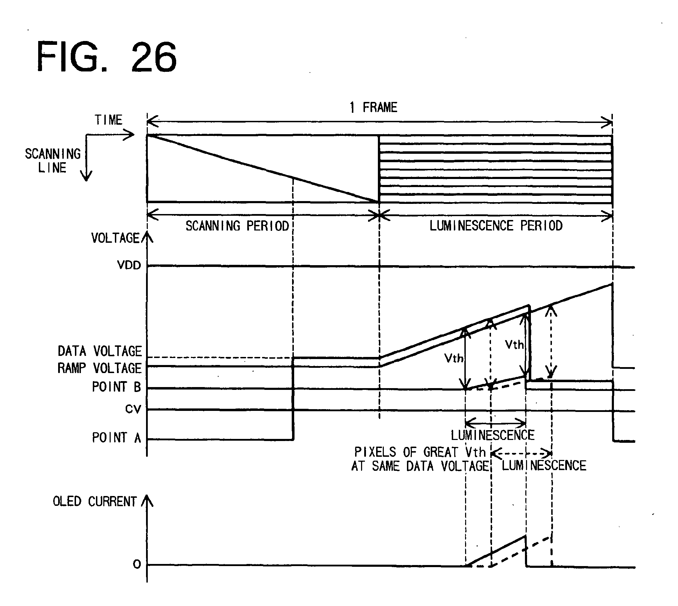

FIG. 26 shows variations in voltages and in the current flowing through the organic EL element in the event of the data voltage altering. The luminescence period of the EL element 50 varies with the variation of the data voltage, whereby images are displayed with multi-level gradation thus realized. For example, if the threshold value of the first transistor TR31 involves a variation in the positive direction, the time to start the luminescence of the EL element 50 is delayed as indicated in broken lines in FIGS. 25 and 26, but the time to stop the luminescence of the element 50 is also delayed by the same amount, with the result that the EL element 50 is luminescent for a period in proportion to the data voltage despite the variations in the threshold values of the two transistors TR31, TR32. Display irregularities are thus avoidable to provide images with a high quality.

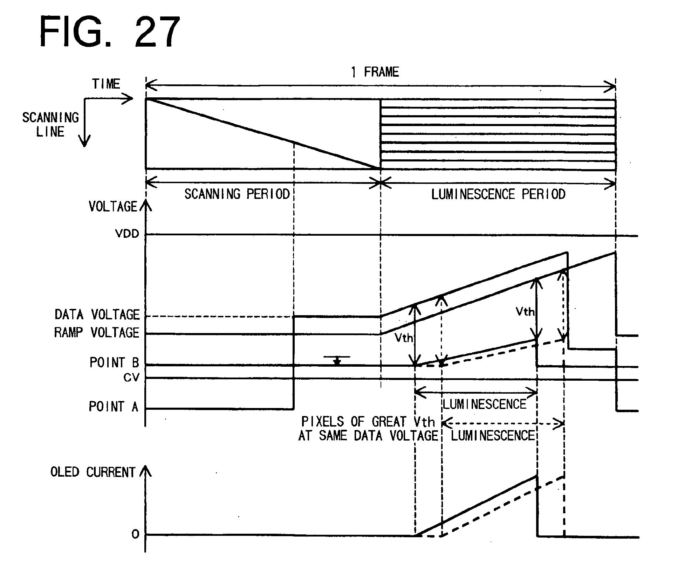

With the circuit construction of the pixel 51 shown in FIG. 24, even if the characteristics of the organic EL element 50 vary due to variations in temperature or variations with time to result in, for example, a lower potential at point B during the scanning period as indicated by an arrow in FIG. 27, the waveform of the current flowing through the EL element 50 merely undergoes translation since the drain of the second transistor TR32 is connected to point B. Display irregularities are unlikely to occur, therefore.

### 13th Embodiment

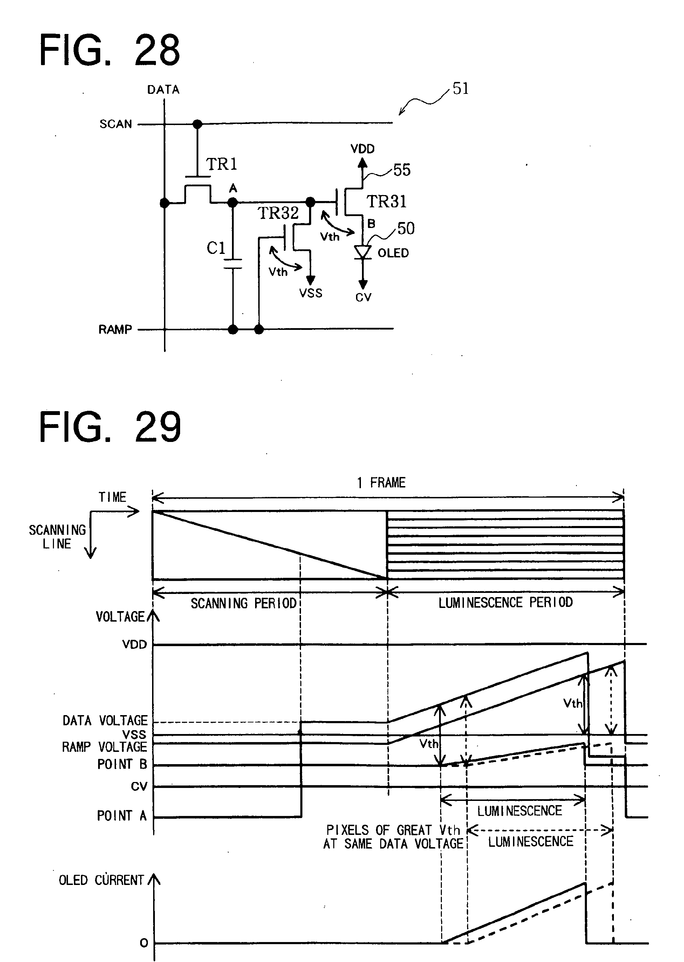

With the pixel 51 shown in FIG. 28, the drain of the second transistor TR32 connected to point B in the above embodiment is connected to the power source V_{SS} of low potential. Upon the difference between the power source voltage V_{SS} and ramp voltage RAMP exceeding the threshold value Vth of the second transistor TR32 in this circuit construction as shown in FIG. 29, the second transistor TR32 conducts, bringing the first transistor TR31 out of conduction. Consequently, the power source V_{DD} stops energizing the organic EL element 50 for the element 50 to discontinue luminescence.

As indicated in broken lines in FIG. 29, the luminescence period of the EL element 51 remains the same in length in proportion to the data voltage despite the variations in the threshold values of the two transistors TR31, TR32. Despite the variations in the characteristics of the two transistors TR31, TR32, therefore, the duration of energization of the EL element 50 is in proportion to the value of the data voltage and involves no likelihood of display irregularities. The first transistor TR31 is positioned on and in series with the power supply line 55 to energize or deenergize the EL element 50, so that the current from the power source V_{DD} flows only through the power supply line 55, hence occurrence of no useless current.

### 14th Embodiment

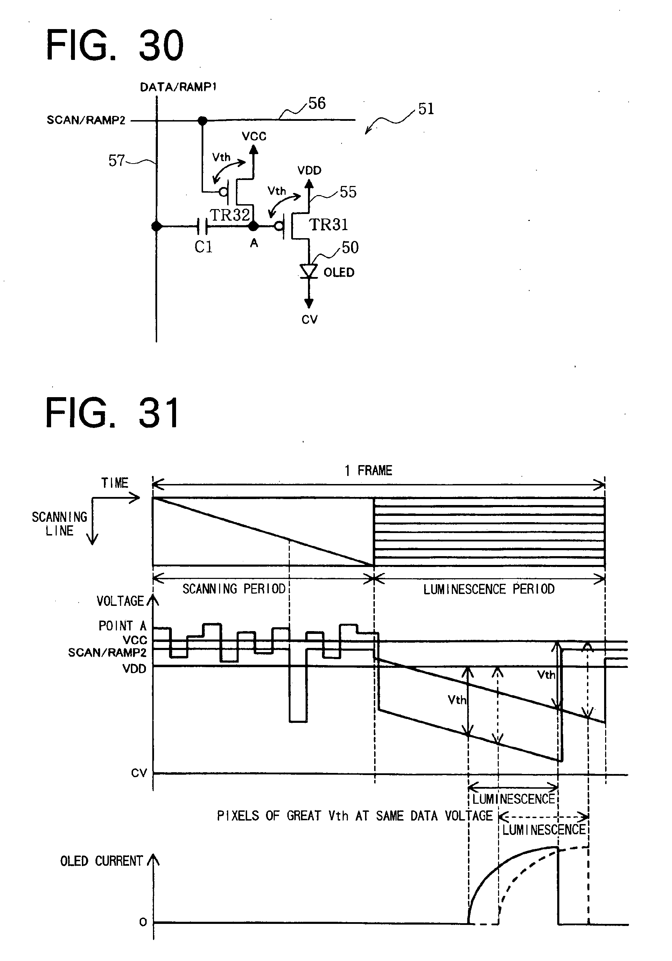

The pixel 51 shown in FIG. 30 has a first signal line 56 for applying scanning voltage SCAN in the first half of 1 frame period and ramp voltage RAMP2 in the second half of 1 frame period, and a second signal line 57 for applying data voltage DATA in the first half of 1 frame period and ramp voltage RAMP1 in the second half of 1 frame period. A first transistor TR31 is provided on a power supply line 55 in series therewith, and the second signal line 57 is connected via a capacitor C1 to point A connected to the gate of the first transistor TR31. The drain of a second transistor rTR32 is also connected to point A. Connected to the source of the second transistor TR32 is a second power source V_{CC} of higher voltage than a first power source V_{DD} connected to the power supply line 55. The first signal line 56 is connected to the gate of the second transistor TR32.

With reference to FIG. 31, the voltage at point A varies with the data voltage of each scanning line to be applied to the second signal line 57 during the scanning period. When the gate of the second transistor TR32 is impressed with the scanning voltage from the first signal line 56, the transistor TR32 conducts, setting the voltage at point A for the voltage V_{CC} of the second power source. At this time, the capacitor C1 is given a potential difference in accordance with the data voltage relative to the power source voltage V_{CC}. The potential difference is maintained in spite of the subsequent variations in the voltage at point A.

In the luminescence period, the voltage at point A is set first for a voltage in accordance with the difference between the voltage held in the capacitor C1 and the ramp voltage RAMP1, and the voltage at point A gradually drops with a reduction in the ramp voltage RAMP1. Upon the difference between the power source voltage V_{DD} and the voltage at point A consequently exceeding the threshold value Vth of the first transistor TR31, the transistor TR31 conducts, allowing the power source V_{DD} to energize the organic EL element 50. As a result, the current flowing through the EL element 50 gradually increases, and the EL element 50 luminesces.

The difference between the second power source voltage V_{CC} and the ramp voltage RAMP2 thereafter exceeds the threshold value Vth of the second transistor TR32, whereupon the second transistor TR32 conducts, thereby bringing the first transistor TR31 out of conduction. Consequently, the passage of current from the power source V_{DD} to the EL element 50 is discontinued to cease the luminescence of the element 50.

With the pixel 51 described, the luminescence period of the organic EL element 50 remains the same in length in proportion to the data voltage despite variations in the threshold values of the two transistors TR31, TR32 as indicated in broken lines in FIG. 31. Thus, the duration of energization of the EL element 50 is in proportion to the value of the data voltage even if the characteristics of the two transistors TR31, TR32 involve variations, hence no likelihood of display irregularities. Furthermore, the first transistor TR31 is positioned on the power supply line 55 in series therewith for energizing or deenergizing the EL element 50, so that that the current from the power source V_{DD} flows only through the supply line 55. The flow of useless current is therefore avoidable.

### 15th Embodiment

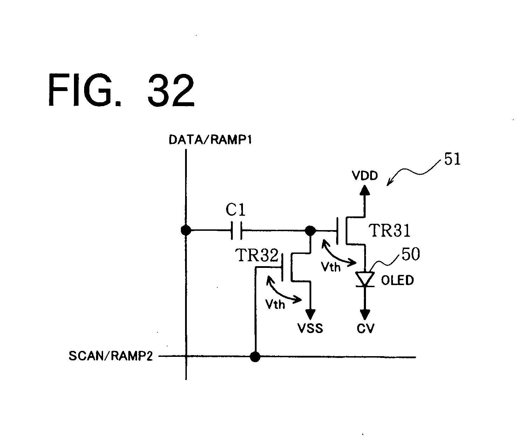

FIG. 32 shows a pixel 51, wherein an n-channel transistor serves as each of the two p-channel transistors TR31, TR32 of the above embodiment to realize exactly the same circuit operation.

### 16th Embodiment

According to this embodiment, ramp voltage is applied to a first transistor TR31 for starting energization, while data voltage is applied to a second transistor TR32 for stopping energization to control the deenergizing timing.

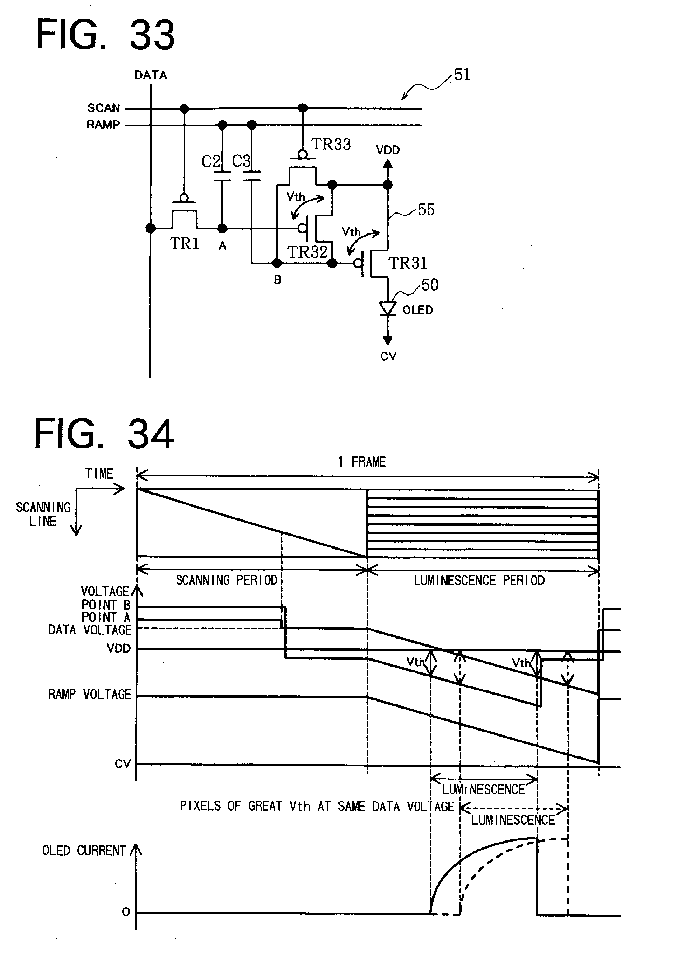

With reference to FIG. 33, each pixel 51 has an organic EL element 50, a write transistor TR1 to be impressed with scanning voltage SCAN for conduction, a first capacitor C2 to be impressed with data voltage by the conduction of the write transistor TR, the first transistor TR31 provided on and positioned in series with a power supply line 55 extending from a power source V_{DD} to the EL element 50, the second transistor TR32 for bringing the first transistor TR31 out of conduction, a third transistor TR33 for applying the voltage of the power source to the gate of the first transistor 31 when brought into conduction by the application of scanning voltage, and a second capacitor C3 interposed between the gate of the first transistor TR31 and a ramp voltage supply line.

The gate of the first transistor TR31 is connected to the ramp voltage supply line via the second capacitor C3 and coupled to the power source V_{DD} by way of the second and third transistors TR32 and TR33. The gate of the second transistor TR32 is coupled to the ramp voltage supply line via the first capacitor C2. The gate of the third transistor TR33 is connected to a scanning voltage supply line.

With reference to FIG. 34, when the write transistor TR1 and the third transistor TR33 of the pixel 51 are brought into conduction by the application of scanning voltage SCAN during the scanning period, the first capacitor C2 is charged with the data voltage to set the output end (point A) thereof for the data voltage, and point B connected to the gate of the first transistor TR31 is set for the power source voltage V_{DD}.

The potentials at point A and point B gradually drop as the ramp voltage RAMP gradually drops during the luminescence period. Upon the difference between the power source voltage V_{DD} and the voltage at point B exceeding the threshold value Vth of the first transistor TR31, the first transistor TR31 conducts, starting to energize the EL element 50. The difference between the power source voltage V_{DD} and the voltage at point A thereafter exceeds the threshold value Vth of the first transistor TR32, whereupon the second transistor TR32 conducts, raising the voltage at point B to the power source voltage V_{DD}. This brings the first transistor TR31 out of conduction to deenergize the EL element 50.

The pixel 51 described has the second capacitor C3 between the ramp voltage supply line and point B, hence no collision between the ramp voltage RAMP and the power source voltage V_{DD}.

With the pixel 51 described, the luminescence period of the organic EL element 50 remains the same in length in proportion to the data voltage despite variations in the threshold values of the two transistors TR31, TR32 as indicated in broken lines in FIG. 34. Thus, the duration of energization of the EL element 50 is in proportion to the value of the data voltage, hence no likelihood of display irregularities. Furthermore, the first transistor TR31 is positioned on the power supply line 55 in series therewith for energizing or deenergizing the EL element 50, so that that the current from the power source V_{DD} flows only through the supply line 55. The flow of useless current is therefore avoidable.

### 17th Embodiment

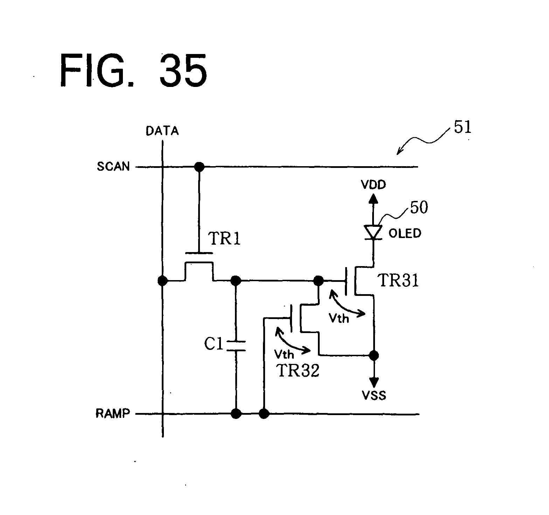

FIG. 35 shows an embodiment wherein an organic EL element 50 is provided at a position of higher potential (V_{DD}) than a first transistor TR31 for driving, with the sources of the first transistor TR31 and second transistor TR32 connected to a power source Vss of low potential. Like the above embodiment, this embodiment also obviates display irregularities and the flow of useless current.

### 18th Embodiment

To be described below are 18th to 24th embodiments wherein the display element is adapted to luminesce in a quantity in proportion to the data voltage despite variations in the characteristics of the EL element.

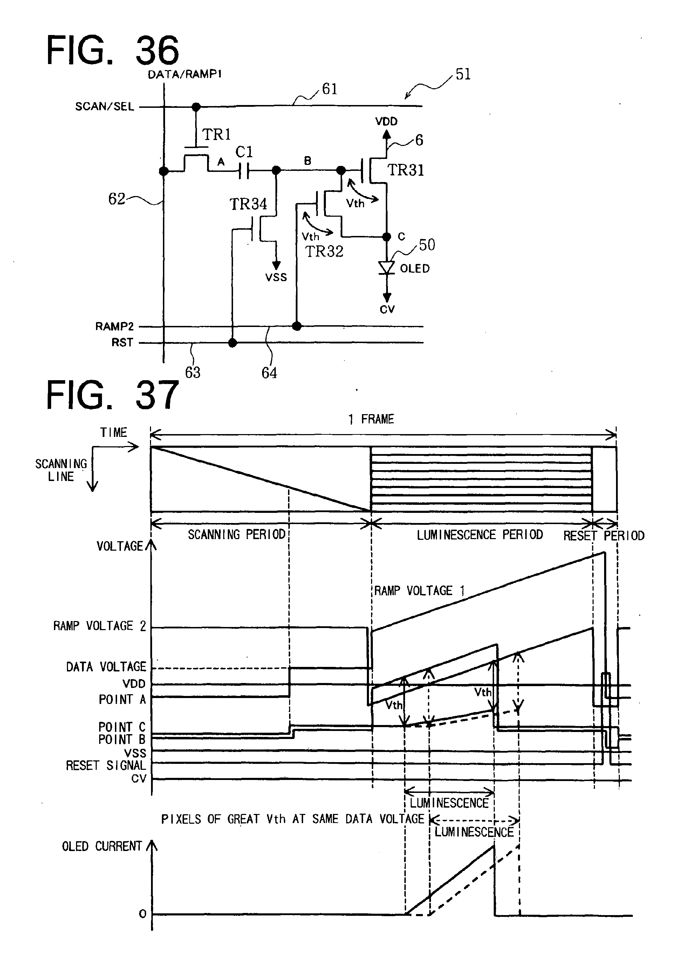

With reference to the 18th embodiment shown in FIG. 36, each pixel 51 has a first signal line 61 for applying scanning voltage SCAN in the first half of 1 frame period and high selected voltage SEL in the second half of 1 frame period, a second signal line 62 for applying data voltage DATA in the first half of 1 frame period and first ramp voltage RAMP1 in the second half of 1 frame period, a third signal line 63 for applying a reset signal RST, and a fourth signal line 64 for applying second ramp voltage RAMP2.

The pixel 51 further has an organic EL element 50, a write transistor TR1, a capacitor C1 to be impressed with the data voltage DATA from the second signal line 62 by the conduction of the write transistor TR1, a first transistor TR31 provided on a power supply line 6 extending from a power source V_{DD} of high potential to the EL element 50, a second transistor TR32 interposed between the output end (point B) of the capacitor C1 and one end (point C) of the EL element 50, and a third transistor TR34 provided between the output end (point B) of the capacitor C1 and a low-potential power source Vss.

The first signal line 61 is connected to the gate of the write transistor TR1. The drain of the write transistor TR1 is connected via the capacitor C1 to the gate of the first transistor TR31. The fourth signal line 64 is connected to the gate of the second transistor TR32. The third signal line 63 is connected to the gate of the third transistor TR34.

As shown in FIG. 37, one frame is divided into a scanning period, luminescence period and reset period. The second ramp voltage RAMP2 drops first in the reset period to thereby bring the second transistor TR32 out of conduction, whereupon the reset signal RST changes to high, causing the third transistor TR34 to conduct to permit the potential at point B to drop to the power source voltage Vss. The second ramp voltage RAMP2 thereafter rises, bringing the second transistor TR3 into conduction. This couples point B to point C to give these points approximately the same potential. The first ramp voltage RAMP1 drops while the reset signal RST is high.

During the scanning period of the next frame, the write transistor TR1 is brought into conduction by the application of scanning voltage SCAN, whereupon the potential at the output end (point A) of the write transistor TR1 rises to the data voltage. This raises the potential at point B and the potential at point C to the luminescence starting voltage of the EL element. At this time, the first transistor TR31 is nonconducting, and the second transistor TR32 is in conduction, with the result that the charge in the capacitor C1 flows to the cathode through the second transistor TR32 and the EL element 50. Accordingly the rise in the potential at point B and point C is smaller than the rise of the potential at point A. The potential at point B is set for the power source voltage V_{SS} by the reset operation in the reset period and is unlikely to drop below the voltage V_{SS}. By raising the potential at point A to the data voltage during the subsequent scanning period, the potentials at point B and point C can be raised to the luminescence starting voltage of the EL element 50.

Simultaneously with completion of the scanning period, the second ramp voltage RAMP2 drops, consequently bringing the second transistor TR32 out of conduction. During the subsequent luminescence period, the first ramp voltage RAMP1 and the second ramp voltage RAMP2 start to rise.

The potential at point A consequently rises as changed over from data voltage to first ramp voltage RAMP1, and the potential at point B rises along with this potential. As a result, upon the difference between the potential at point B and the potential at point C exceeding the threshold level Vth of the first transistor TR31, the transistor TR31 conducts, starting to energize the EL element 50 for luminescence.

With a rise in the second ramp voltage RAMP2, the difference between this voltage and the potential at point C thereafter exceeds the threshold value Vth of the second transistor TR32, whereupon the second transistor TR32 conducts. This brings the first transistor TR31 out of conduction to deenergize the EL element 50 to complete the luminescence of the element 50.

With the pixel 51 described, the luminescence period of the organic EL element 50 remains the same in length in proportion to the data voltage despite variations in the threshold values of the two transistors TR31, TR32 as indicated in broken lines in FIG. 37. Thus, the duration of energization of the EL element 50 is in proportion to the value of the data voltage, hence no likelihood of display irregularities. Furthermore, the first transistor TR31 is positioned on the power supply line 6 in series therewith for energizing or deenergizing the EL element 50, so that that the current from the power source V_{DD} flows only through the supply line 6. The flow of useless current is therefore avoidable.

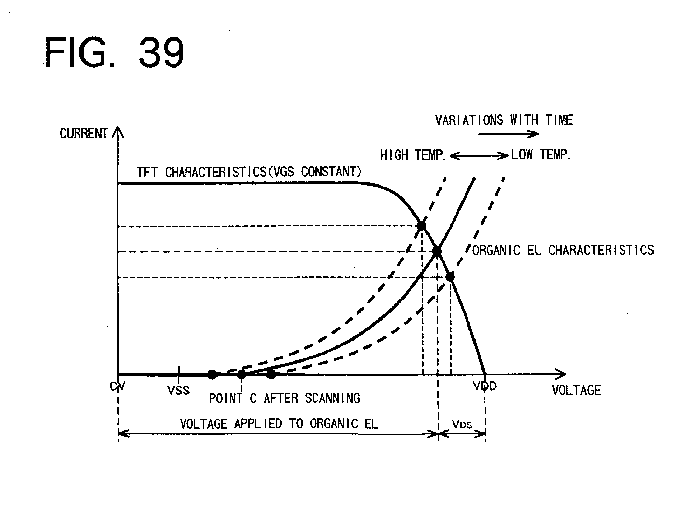

Additionally, the problem due to the temperature variations or variations with time which are involved in the organic EL element 50 can be overcome by the present embodiment. Stated more specifically with reference to FIG. 39, the temperature variations or variations with time of the organic EL element vary the organic EL characteristics, consequently resulting in an altered point of operation and an altered quantity of luminescence. This problem is overcome by feeding back the potential (terminal voltage at the luminescence starting time) at point C after scanning to the duration of the EL element 50 according to the invention.

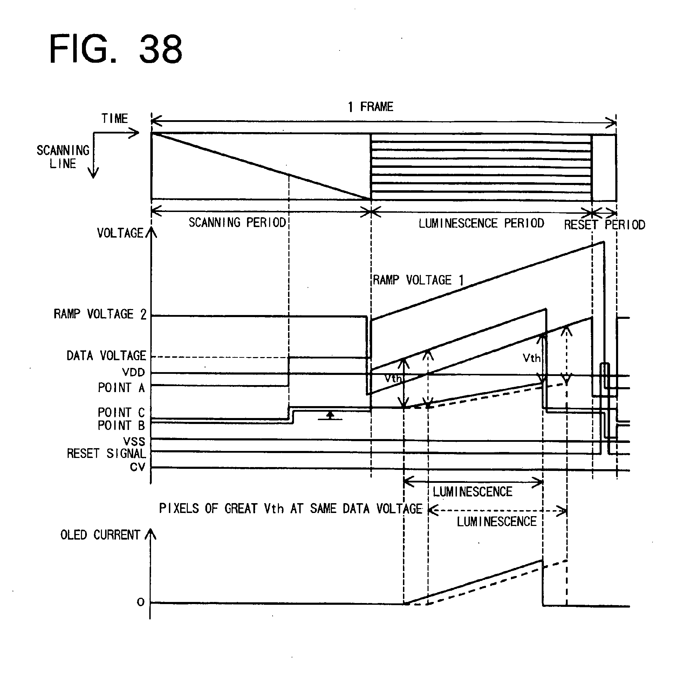

FIG. 38 shows the operation of the EL element when the organic EL characteristics shift toward the right owing to temperature variations or variations with time of the organic EL element. As illustrated, the application of scanning voltage SCAN during the scanning period raises the potential at point A to the data voltage, consequently slightly raising the potential at point B and the potential at point C. The rises in the potentials at point B and point C are slightly greater owing to the shift of the organic EL characteristics than in the absence of shift (FIG. 37) as indicated by an arrow.

In the subsequent luminescence period, the first ramp voltage RAMP1 and the second ramp voltage RAMP2 start to rise, and upon the difference between the potential at point B and the potential at point C exceeding the threshold value Vth of the first transistor TR31, this transistor TR31 conducts, starting to energize the EL element 50 and causing the element 50 to luminesce. This time point is the same as in the case where there is no characteristics shift (FIG. 37).

Owing to a rise in the second ramp voltage RAMP2, the difference between the second ramp voltage RAMP2 and the potential at point C thereafter exceeds the threshold level Vth of the second transistor TR32, whereupon the transistor TR32 conducts. However, the potential at point C which is higher than in the absence of the characteristics shift as stated above delays the time for the difference between the second ramp voltage RAMP2 and the potential at point C to exceed the threshold level Vth of the second transistor TR32, namely, the luminescence completion timing of the EL element 50.

In the case where the organic EL characteristics shift toward the right owing to temperature variations or variations with time of the organic EL element as shown in FIG. 39, the current flowing through the EL element is lower as illustrated. Accordingly, the variations in current from the start of energization of the EL element until the deenergization thereof are moderate as shown in FIG. 38, and the peak current is also lower. According to the present embodiment, the period of time from the start of energization of the EL element until the deenergization thereof is lengthened so that the total quantity of luminescence of the EL element from the start of energization until deenergization within 1 frame is definite regardless of the amount of shift of the organic EL characteristics. In the case where the organic EL characteristics shift toward the left owing to temperature variations, the total quantity of luminescence from the start of energization of the EL element until the deenergization thereof is also definite.

### 19th Embodiment

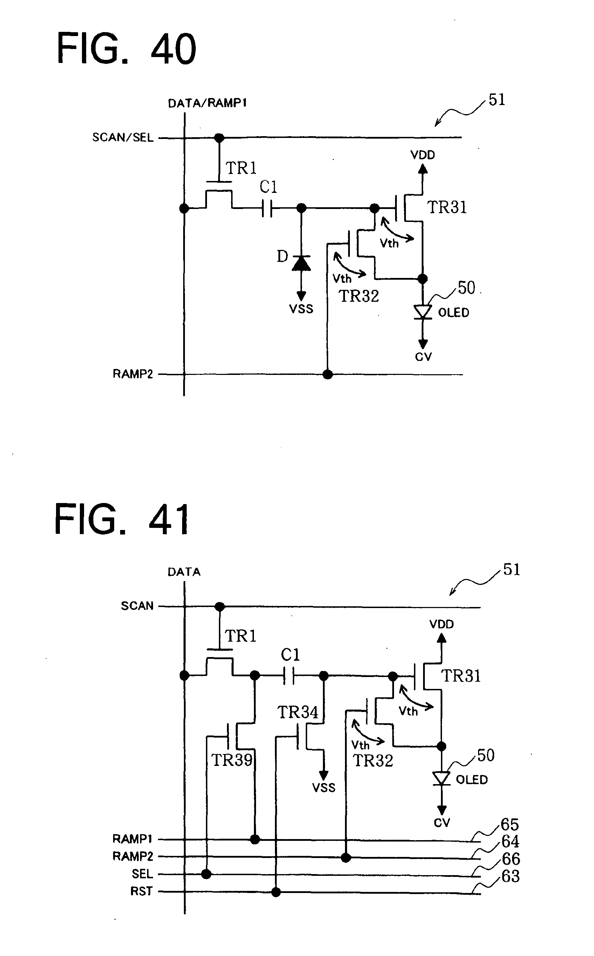

FIG. 40 shows a pixel 51 wherein a diode D is provided between the output end of a capacitor C1 and a power source V_{SS}, in place of the third transistor TR34 of the 18th embodiment. The diode D prevents the potential at the outlet end of the capacitor C1 from dropping below the power source voltage V_{SS}. This embodiment has the same advantage as the 18th embodiment.

### 20th Embodiment

FIG. 41 shows a pixel 51 which has signal lines provided for respective signals, in place of the first signal line 61 and the second signal line 62 of the signal changeover type of the 18th embodiment. The pixel has a signal line 65 specifically for use in applying first ramp voltage RAMP1 and a signal line 66 specifically for use in applying select voltage SEL. With this modification, a transistor TR39 is interposed between the drain of the write transistor TR1 and the signal line 65 for the first ramp voltage, and the gate of the transistor 39 is connected to the signal line 66 for the select voltage.

The pixel 51 operates in the same manner as in the 18th embodiment and produces the same effect as the 18th embodiment. The signal lines provided exclusively for the respective signals make it possible to start the application of ramp voltage immediately after the application of scanning voltage, with the result that 1 frame can be almost entirely usable as the luminescence period.

### 21st Embodiment

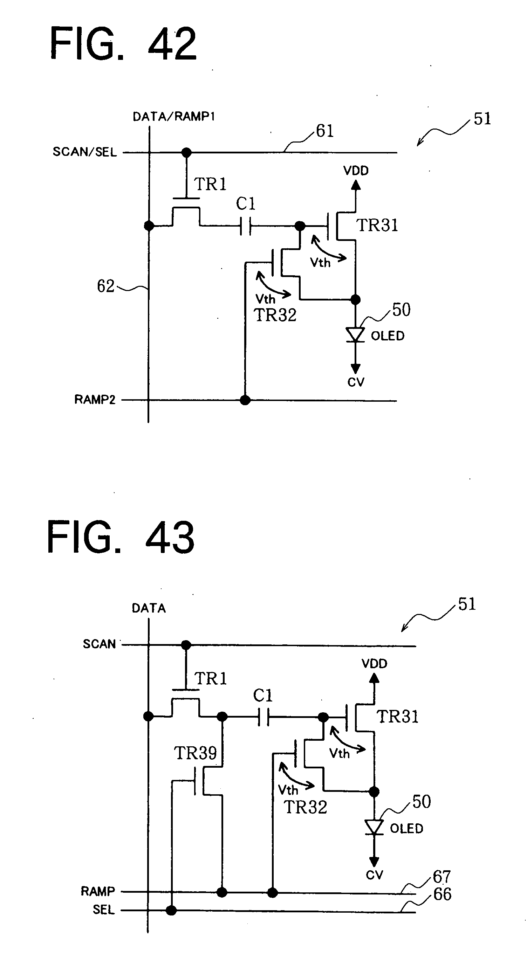

With reference to FIG. 42, the reset circuit construction included in the 18th embodiment is omitted from this embodiment. Organic EL elements 50 have a capacitance component because of their structure, while this embodiment is useful in the case where the capacitance of the EL element 50 is sufficiently greater than the capacitance C1. With reference to FIG. 36, variations in the potential at point C are small relative to variations in the potential at point A in this case, so that the drop in the potential at point B does not become excessive, hence no need for a resetting operation for suppressing the drop in the voltage at point B.

### 22nd Embodiment

FIG: 43 shows a pixel 51 which has signal lines provided for respective signals, in place of the first signal line 61 and the second signal line 62 of the signal changeover type of the 21st embodiment. The pixel has a signal line 67 specifically for use in applying ramp voltage RAMP and a signal line 66 specifically for use in applying select voltage SEL. With this modification, a transistor TR39 is interposed between the drain of the write transistor TR1 and the signal line 67 for the ramp voltage, and the gate of the transistor 39 is connected to the signal line 66 for the select voltage. The pixel 51 operates in the same manner as in the 21st embodiment and has the same advantage as in the 21st embodiment.

### 23rd Embodiment

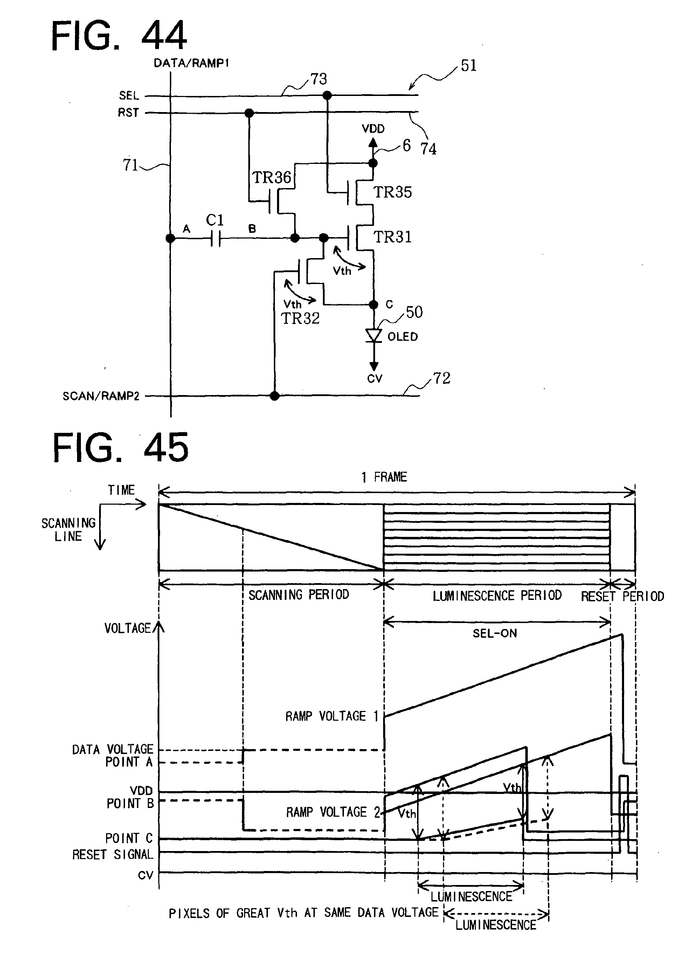

With reference to FIG. 44, this embodiment has a first signal line 71 for applying data voltage DATA in the first half of 1 frame period and first ramp voltage RAMP1 in the second half of 1 frame period, a second signal line 72 for applying scanning voltage SCAN in the first half of 1 frame period and second ramp voltage RAMP2 in the second half of 1 frame period, a third signal line 73 for applying a high select signal SEL, and a fourth signal line 74 for applying a reset signal RST.

The pixel 51 has an organic EL element 50, a capacitor C1 to be impressed with the data voltage DATA from the first signal line 71, a first transistor TR31 provided on a power supply line 6 extending from a power source V_{DD} to the EL element 50, a second transistor TR32 interposed between the output end (point B) of the capacitor C1 and one end (point C) of the EL element 50, a third transistor TR35 provided between the V_{DD} and the first transistor TR31, and a fourth transistor TR36 between the V_{DD} and point B.

The first signal line 71 is connected to the gate of the first transistor TR31 via the capacitor C1. The second signal line 72 is connected to the gate of the second transistor TR32. The third signal line 73 is connected to the gate of the third transistor TR35. The fourth signal line 74 is connected to the gate of the fourth transistor TR36.

As shown in FIG. 45, one frame is divided into a scanning period, luminescence period and reset period. The second ramp voltage RAMP2 drops first in the reset period to thereby bring the second transistor TR32 out of conduction, whereupon the reset signal RST changes to high, causing the fourth transistor TR36 to conduct and permitting the potential at point B to rise to the power source voltage V_{DD}. The first ramp voltage RAMP1 drops.

During the scanning period of the next frame, the second transistor TR32 is brought into conduction by the application of scanning voltage SCAN, whereupon the potential at point A rises to the data voltage. The potential at point B drops to the potential at point C (the luminescence starting voltage of the EL element).

In the luminescence period, the third transistor TR35 is brought into conduction by a high select signal SEL. The first and second ramp voltages RAMP1, RAMP2 start to rise. This causes the potential at point A to rise as changed over from data voltage to first ramp voltage RAMP1, and the potential at point B rises with the potential rise. The difference between the potential at point B and the potential at point C exceeds the threshold level Vth of the first transistor TR31, whereupon this transistor TR31 conducts, starting to energize the EL element 50 for the start of luminescence.

With a rise in the second ramp voltage RAMP2, the difference between this voltage and the potential at point C thereafter exceeds the threshold value Vth of the second transistor TR32, whereupon the second transistor TR32 conducts. This brings the first transistor TR31 out of conduction to deenergize the EL element 50 to complete the luminescence of the element 50.

With the pixel 51 described, the luminescence period of the organic EL element 50 remains the same in length in proportion to the data voltage despite variations in the threshold values of the first and second transistors TR31, TR32 as indicated in broken lines in FIG. 45. Thus, the duration of energization of the EL element 50 is in proportion to the value of the data voltage, hence no likelihood of display irregularities.

Furthermore, the first transistor TR31 is positioned on the power supply line 6 in series therewith for energizing or deenergizing the EL element 50, so that the current from the power source V_{DD} flows only through the supply line 6. The flow of useless current is therefore avoidable.

Even if temperature variations or variations with time of the organic EL element 50 vary or shift the organic EL characteristics, the quantity of luminescence remains unaltered because the potential at point C after scanning is fed back to the duration of energization of the organic EL element 50.

### 24th Embodiment

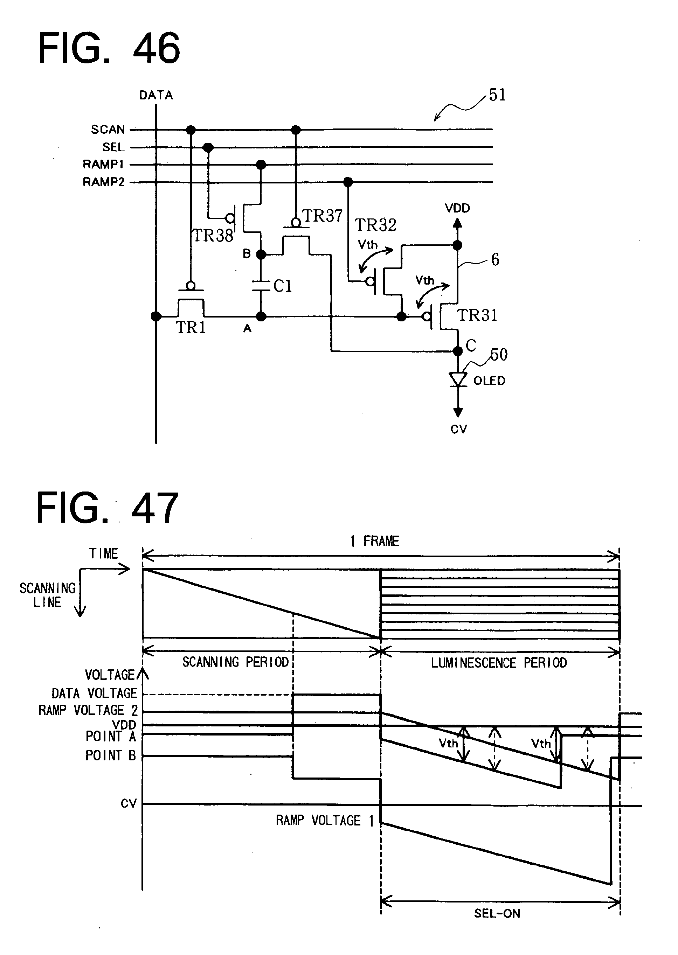

FIG. 46 shows a pixel 51 which has signal lines for individually supplying data voltage DATA, scanning voltage SCAN, select signal SEL, first ramp signal RAMP1 and second ramp signal RAMP2, respectively. Each of transistors is a p-channel transistor.

As shown in FIG. 46, each pixel 51 has a write transistor TR1 to be impressed with the scanning voltage on its gate, a capacitor C1 connected to the output end (point A) of the write transistor TR1, a first transistor TR31 provided on a power supply line 6 extending from a power source V_{DD} to an organic EL element 50, a second transistor TR32 interposed between the power source V_{DD} and the gate of the first transistor TR31, a third transistor TR37 provided between one end (point B) of the capacitor C1 and one end (point C) of the EL element 50, and a fourth transistor TR38 for applying the first ramp voltage RAMP1 to point B.

Point A is connected to the gate of the first transistor TR31. The second ramp voltage RAMP2 is applied to the gate of the second transistor TR32, the scanning voltage SCAN is applied to the gate of the third transistor TR37, and the select signal SEL which becomes high during the luminescence period is applied to the fourth transistor TR38.

With reference to FIG. 47, the scanning voltage SCAN is applied during the scanning period, whereupon the write transistor TR1 is brought into conduction, permitting the potential at point A to rise to the data voltage. The third transistor TR37 conducts, causing the potential at point B to drop to the potential (luminescence starting voltage of the EL element) at point C.

Subsequently in the luminescence period, the application of select signal brings the fourth transistor TR38 into conduction. The first and second ramp voltages RAMP1, RAMP2 start to drop, and the potential at point A gradually drops with the drop in the first ramp voltage RAMP1. Consequently, upon the difference between the potential at point A and the power source voltage V_{DD} exceeding the threshold level Vth of the first transistor TR31, the transistor TR31 conducts, starting to energize the EL element 50 for the start of luminescence of the element 50.

The difference between the second ramp voltage RAMP2 and the power source voltage V_{DD} thereafter exceeds the threshold level Vth of the second transistor TR32, whereupon the second transistor TR32 conducts. This brings the first transistor TR31 out of conduction to deenergize the EL element 50 and complete luminescence of the element 50. The first ramp voltage RAMP1 rises upon completion of the luminescence period, and the potential at point B rises with this voltage. Subsequently, the second ramp voltage RAMP2 rises to bring the second transistor TR32 out of conduction.

With the pixel 51 described, the luminescence period of the EL element 50 remains the same in length in proportion to the data voltage despite variations in the threshold values of the first and second transistors TR31, TR32. Thus, the duration of energization of the EL element 50 is in proportion to the value of the data voltage, hence no likelihood of display irregularities.

Furthermore, the first transistor TR31 is positioned on the power supply line 6 in series therewith for energizing or deenergizing the EL element 50, so that that the current from the power source V_{DD} flows only through the supply line 6. The flow of useless current is therefore avoidable. Even if temperature variations or variations with time of the organic EL element 50 vary or shift the organic EL characteristics, the quantity of luminescence remains unaltered because the potential at point C after scanning is fed back to the duration of energization of the organic EL element 50.

### 25th Embodiment

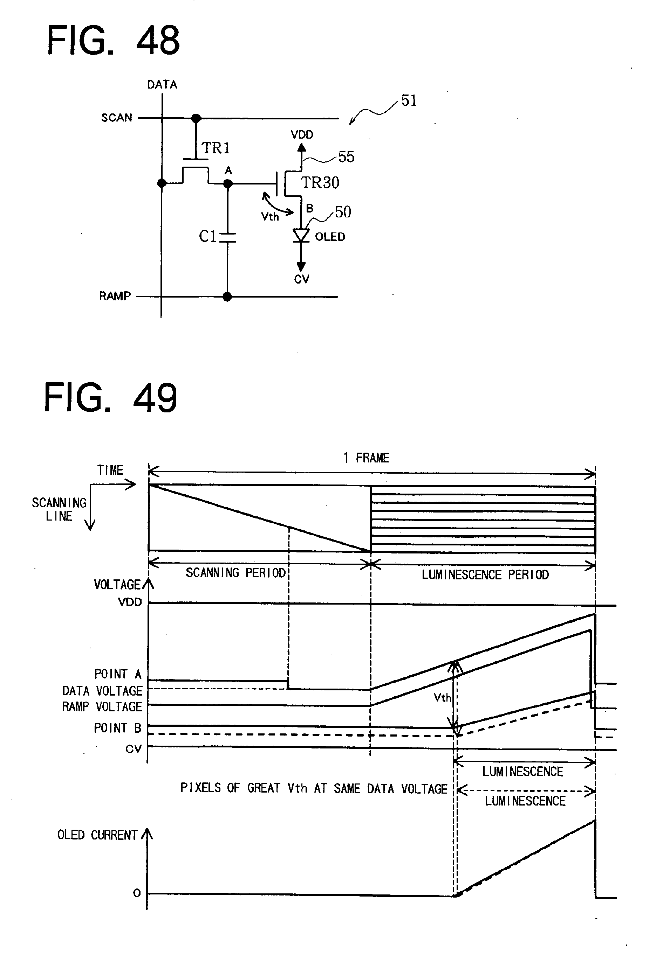

This embodiment corresponds to the 12th embodiment of FIG. 24 from which the second transistor TR32 is omitted. With reference to FIG. 48, each pixel 51 has a write transistor TR1 and a drive transistor TR30 each of which is an n-channel transistor, and a capacitor C1 to be impressed with data voltage by the conduction of the write transistor TR1. The capacitor C1 is provided between point A connected to the drain of the write transistor TR1 and a ramp voltage supply line. Point A is connected to the gate of the drive transistor TR30. Scanning voltage SCAN is applied to the gate of the write transistor TR1. The drive transistor TR30 is provided on a power supply line 55 in series therewith, and is brought into conduction upon the difference between the gate voltage thereof and the high-potential terminal voltage (voltage at point B) of the EL element 50 exceeding a predetermined threshold value Vth.

When the write transistor TR1 is brought into conduction by the application of scanning voltage SCAN in the scanning period, the potential at point A is set for the data voltage as shown in FIG. 49, whereby the capacitor C1 is charged.

When the ramp voltage RAMP gradually rises subsequently in the luminescence period, the voltage at point A also gradually rises with the ramp voltage at the same rate. Consequently, the difference between the voltage at point B and the voltage at point A exceeds the threshold value Vth of the drive transistor TR30, whereupon the transistor TR30 conducts, permitting the power supply V_{DD} to energize the EL element 50. This increases the current flowing through the EL element 50 to cause luminescence of the element 50. Incidentally, the potential at point B rises with an increase in the current through the EL element 50.

When the ramp voltage thereafter drops to the original level upon completion of the frame, potential at point A also drops toward the original level, whereby the drive transistor TR30 is brought out of conduction. Consequently, the passage of current from the power source V_{DD} to the EL element 50 is discontinued to stop the luminescence of the element 50.

With the circuit construction of the pixel 51 described above, the time to start luminescence is controlled in accordance with the data voltage by the drive transistor TR30. However, the time to complete luminescence is fixed at the frame completion time. It is therefore likely that the duration of energization of the EL element 50 becomes no longer proportional to the value of data voltage, possibly permitting display irregularities if the characteristics of the drive transistor TR30 involve variations.

However, for example, by passing a very small current through the drive transistor TR30 in the pixel 51 of FIG, 48, an inversely proportional relationship will be realized between the threshold value Vth of the drive transistor TR30 and the potential at point B, namely, such relationship that if the threshold value Vth of the drive transistor TR30 increases, the potential at point B drops, whereas if the threshold value Vth decreases, the potential rises. Even if the threshold value Vth of the drive transistor TR30 involves variations as indicated by the broken lines in FIG. 49, almost no difference will then occur in the time for the difference between the voltage at point B and the voltage at point A to exceed the threshold value Vth of the drive transistor TR30, insofar as the data voltage is at the same level. Consequently, despite variations in the characteristics of the drive transistor TR30, the duration of energization of the organic EL element 50 is in proportion to the magnitude of data voltage. This eliminates the likelihood of display irregularities.

Although embodiments have been described above with reference to the case wherein the display element is a current drive element, a voltage drive element is usable in place of the current drive element. The drive transistor TR2 in the first to ninth embodiments can then be dispensed with. Further the capacitors C2, C3, C12 and C22 can be dispensed with if the parasitic capacitances or wiring capacitances of transistors are usable instead. Further in the first to fifth embodiments, the timing for or duration of application of the reset signal is determined as desired insofar as the signal is used during a period other than the luminescence period.

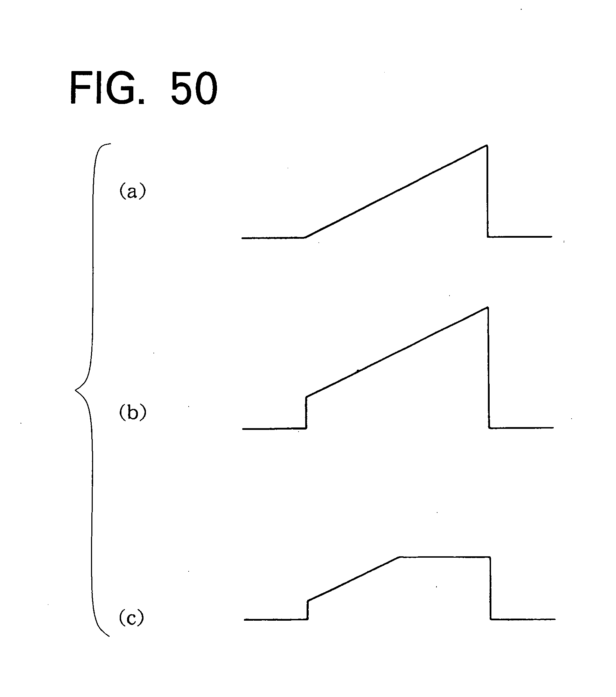

The ramp voltage need not always have a waveform showing a uniform rate of gradual increase or gradual decrease over the entire luminescence period as shown in FIG. 50, (a), (b), (c). For example in the 12th embodiment shown in FIGS. 24 to 27 or in the 18th to 23rd embodiments shown in FIGS. 36 to 45, it is possible to use a voltage waveform representing a gradual increase or gradual decrease in the first half of the luminescence period and a constant value in the second half of the luminescence period.

## Claims

1. A display device of the active matrix drive type comprising a display panel having a plurality of pixels arranged in the form of a matrix, each of the pixels of the display panel having a display element luminescent when supplied with electric power, and a control circuit for controlling the luminescence period of the display element within 1 frame period in accordance with data voltage to be supplied from outside, the display device being **characterized in that** the control circuit of each pixel of the display panel comprises a first control element for starting to energize the display element and a second control element for deenergizing the display element.

2. A display device of the active matrix drive type according to claim 1 wherein a voltage gradually increasing or gradually decreasing during at least a portion of 1 frame period is applied to a control terminal of each of the first control element and the second control element, whereby the operation of each control element is controlled.

3. A display device of the active matrix drive type comprising a display panel having a plurality of pixels arranged in the form of a matrix, and a scanning driver and a data driver which are connected to the display panel,
the display device being **characterized in that** each of the pixels of the display panel comprises a display element luminescent when supplied with current or voltage, a write element to be brought into conduction when impressed with scanning voltage from the scanning driver, voltage holding means to be impressed with data voltage from the data driver by the conduction of the write element for holding the data voltage, a drive element for energizing or deenergizing the display element in response to the input of an on/off control signal, an on-control element for turning on the drive element, an off-control element for turning off the drive element, and control means for controlling the timing of the on-operation of the on-control element or the off-operation of the off-control element in accordance with the output voltage of the voltage holding means.

4. A display device of the active matrix drive type comprising a display panel having a plurality of pixels arranged in the form of a matrix, and a scanning driver and a data driver which are connected to the display panel,
the display device being **characterized in that** each of the pixels of the display panel comprises a display element luminescent when supplied with current or voltage, a write element to be brought into conduction when impressed with scanning voltage from the scanning driver, voltage holding means to be impressed with data voltage from the data driver by the conduction of the write element for holding the data voltage, a drive element for energizing or deenergizing the display element in response to the input of an on/off control signal and an off-control element for turning off the drive element, the pixels being divided into pixel groups each comprising pixels adjacent to one another and each having an on-control element for turning on the drive element of each of the pixels of the group, and control means for controlling the timing of the off-operation of the off-control element in accordance with the output voltage of the voltage holding means of each pixel.

5. A display device of the active matrix drive type comprising a display panel having a plurality of pixels arranged in the form of a matrix, and a scanning driver and a data driver which are connected to the display panel,
the display device being **characterized in that** each of the pixels of the display panel comprises a display element luminescent when supplied with current or voltage, a write element to be brought into conduction when impressed with scanning voltage from the scanning driver, voltage holding means to be impressed with data voltage from the data driver by the conduction of the write element for holding the data voltage, a drive element for energizing or deenergizing the display element in response to the input of an on/off control signal and an on-control element for turning on the drive element, the pixels being divided into pixel groups each comprising pixels adjacent to one another and each having an off-control element for turning off the drive element of each of the pixels of the group, and control means for controlling the timing of the on-operation of the on-control element in accordance with the output voltage of the voltage holding means of each pixel.

6. A display device of the active matrix drive type comprising a display panel having a plurality of pixels arranged in the form of a matrix, and a scanning driver and a data driver which are connected to the display panel, the display device being **characterized in that** each of the pixels of the display panel comprises:
a display element luminescent when supplied with current or voltage,
a write element to be brought into conduction when impressed with scanning voltage from the scanning driver,
voltage holding means to be impressed with data voltage from the data driver by the conduction of the write element for holding the data voltage,
a drive element for energizing or deenergizing the display element in response to the input of an on/off control signal, and
pulse-width modulation control means for on/off-controlling the drive element by pulse-width-modulating the output voltage of the voltage holding means with ramp voltage having a predetermined rate of variation, the pulse-width modulation control means comprising an on-control element for turning on the drive element, and an off-control element for turning off the drive element.

7. A display device of the active matrix drive type according to claim 6 wherein the on-control element operates when impressed with a voltage in accordance with the ramp voltage to turn on the drive element, and the off-control element operates when impressed with a voltage in accordance with the sum of the data voltage and the ramp voltage to turn off the drive element.

8. A display device of the active matrix drive type according to claim 6 wherein the on-control element operates when impressed with a voltage in accordance with the value of sum of the data voltage and the ramp voltage to turn on the drive element, and the off-control element operates when impressed with a voltage in accordance with the value of the ramp voltage to turn off the drive element.

9. A display device of the active matrix drive type according to claim 3 wherein a signal line connecting a power source of high potential for supplying the current to the display element to a power source of a low potential serving as an operation reference for the on-control element and the off-control element has an element provided thereon for blocking the current flowing from the power source of high potential to the power source of low potential.

10. A display device of the active matrix drive type according to claim 3 wherein each of the pixels of the display panel comprises a current program circuit for programming the current to be passed through the display element.

11. A display device of the active matrix drive type according to claim 1 wherein the first control element is provided on and connected in series with a power supply line extending from a power source for supplying the electric power to the display element, is turned on when starting to energize the display element and starts to energize the display element, and the second control element is turned on when deenergizing the display element and turns off the first control element to thereby deenergize the display element.

12. A display device of the active matrix drive type according to claim 11 wherein the control circuit of each pixel of the display panel has a write element to be brought into conduction when impressed with scanning voltage, voltage holding means to be impressed with data voltage by the conduction of the write element for holding the data voltage, and pulse-width modulation control means for on/off-controlling the first control element and the second control element by pulse-width-modulating the output voltage of the voltage holding means with ramp voltage having a predetermined rate of variation.

13. A display device of the active matrix drive type according to claim 11 wherein the control circuit of each pixel of the display panel has a write transistor to be brought into conduction when impressed with scanning voltage and a capacitor to be impressed with data voltage by the conduction of the write transistor for holding the data voltage, the first control element comprising a first transistor provided on and connected in series with the power supply line and to be brought into conduction upon the difference between the voltage to be applied to a gate thereof and the voltage of the power source exceeding a predetermined threshold value, the second control element comprising a second transistor to be brought into conduction upon the difference between the voltage to be applied to a gate thereof and the power source voltage exceeding a predetermined threshold value to bring the first transistor out of conduction, a voltage in accordance with the sum of ramp voltage having a predetermined rate of variation and the output voltage of the capacitor is applied to the gate of the first transistor, and the ramp voltage is applied to the gate of the second transistor.

14. A display device of the active matrix drive type according to claim 11 wherein the control circuit of each pixel of the display panel has a write transistor to be brought into conduction when impressed with scanning voltage and a capacitor to be impressed with data voltage by the conduction of the write transistor for holding the data voltage, the first control element comprising a first transistor provided on and connected in series with the power supply line and to be brought into conduction upon the difference between the voltage to be applied to a gate thereof and the voltage of the power source or the voltage at one terminal of the display element exceeding a predetermined threshold value, the second control element comprising a second transistor to be brought into conduction upon the difference between the voltage to be applied to a gate thereof and the power source voltage or the voltage at said one terminal of the display element exceeding a predetermined threshold value to bring the first transistor out of conduction, a voltage in accordance with the sum of a first ramp voltage having a predetermined rate of variation and the output voltage of the capacitor is applied to the gate of the first transistor, and a second ramp voltage having a predetermined rate of variation is applied to the gate of the second transistor.

15. A display device of the active matrix drive type according to claim 11 wherein the control circuit of each pixel of the display panel has a write transistor to be brought into conduction when impressed with scanning voltage and a capacitor to be impressed with data voltage by the conduction of the write transistor for holding the data voltage, the first control element comprising a first transistor provided on and connected in series with the power supply line and to be brought into conduction upon the difference between the voltage to be applied to a gate thereof and the voltage at one terminal of the display element exceeding a predetermined threshold value, the second control element comprising a second transistor to be brought into conduction upon the difference between the voltage to be applied to a gate thereof and the voltage at said one terminal of the display element exceeding a predetermined threshold value to bring the first transistor out of conduction, a voltage in accordance with the sum of ramp voltage having a predetermined rate of variation and the output voltage of the capacitor is applied to the gate of the first transistor, and the ramp voltage is applied to the gate of the second transistor.

16. A display device of the active matrix drive type according to claim 11 wherein the control circuit of each pixel of the display panel has a write transistor to be brought into conduction when impressed with scanning voltage and a capacitor to be impressed with data voltage by the conduction of the write transistor for holding the data voltage, the first control element comprising a first transistor provided on and connected in series with the power supply line and to be brought into conduction upon the difference between the voltage to be applied to a gate thereof and the voltage at one terminal of the display element exceeding a predetermined threshold value, the second control element comprising a second transistor to be brought into conduction upon the difference between the voltage to be applied to a gate thereof and a predetermined constant voltage exceeding a predetermined threshold value to bring the first transistor out of conduction, a voltage in accordance with the sum of ramp voltage having a predetermined rate of variation and the output voltage of the capacitor is applied to the gate of the first transistor, and the ramp voltage is applied to the gate of the second transistor.

17. A display device of the active matrix drive type according to claim 11 wherein the control circuit of each pixel of the display panel has a first signal line for applying scanning voltage in the first half of 1 frame period and applying a first ramp voltage in the second half of 1 frame period, and a second signal line for applying data voltage in the first half of 1 frame period and applying a second ramp voltage in the second half of 1 frame period, the first control element comprising a first transistor provided on and connected in series with the power supply line and to be brought into conduction upon the difference between the voltage to be applied to a gate thereof and the voltage of the power source exceeding a predetermined threshold value, the second control element comprising a second transistor to be brought into conduction upon the difference between the voltage to be applied to a gate thereof and a predetermined constant voltage exceeding a predetermined threshold value to bring the first transistor out of conduction, the second signal line being connected to the gate of the first transistor via a capacitor, the first signal line being connected to the gate of the second transistor.

18. A display device of the active matrix drive type according to claim 11 wherein the control circuit of each pixel of the display panel has a first signal line for applying scanning voltage in the first half of 1 frame period and applying a first ramp voltage in the second half of 1 frame period, and a second signal line for applying data voltage in the first half of 1 frame period and applying a second ramp voltage in the second half of 1 frame period, the first control element comprising a first transistor provided on and connected in series with the power supply line and to be brought into conduction upon the difference between the voltage to be applied to a gate thereof and the voltage at one terminal of the display element exceeding a predetermined threshold value, the second control element comprising a second transistor to be brought into conduction upon the difference between the voltage to be applied to a gate thereof and a predetermined constant voltage exceeding a predetermined threshold value to bring the first transistor out of conduction, the second signal line being connected to the gate of the first transistor via a capacitor, the first signal line being connected to the gate of the second transistor.

19. A display device of the active matrix drive type according to claim 11 wherein the control circuit of each pixel of the display panel has a write transistor to be brought into conduction when impressed with scanning voltage, a first capacitor to be impressed with data voltage by the conduction of the write transistor for holding the data voltage, a first transistor serving as the first control element and to be brought into conduction upon the difference between the voltage to be applied to a gate thereof and the voltage of the power source exceeding a predetermined threshold value, a second transistor serving as the second control element and to be brought into conduction upon the difference between the voltage to be applied to a gate thereof and the power source voltage exceeding a predetermined threshold value to bring the first transistor out of conduction, and a third transistor to be brought into conduction when impressed with the scanning voltage to apply the power source voltage to the gate of the first transistor, a voltage in accordance with ramp voltage having a predetermined rate of variation is applied to the gate of the first transistor, and a voltage in accordance with the sum of the ramp voltage and the output voltage of the first capacitor is applied to the gate of the second transistor, the gate of the first transistor being connected via a second capacitor to a signal line for applying the ramp voltage thereto.

20. A display device of the active matrix drive type according to claim 11 wherein the control circuit of each pixel of the display panel has luminescence period adjusting means for adjusting the luminescence period of the display element by controlling the time to turn on the first control element in accordance with the voltage at one of terminals of the display element at the time when the luminescence is started or the time to turn on the second control element.

21. A display device of the active matrix drive type according to claim 20 wherein the luminescence period adjusting means lengthens the luminescence period of the display element when the voltage across the terminals of the display element increases at the time when the luminescence is started, and shortens the luminescence period of the display element when the voltage across the terminals diminishes.

22. A display device of the active matrix drive type according to claim 11 wherein the control circuit of each pixel of the display panel has a write transistor to be brought into conduction when impressed with scanning voltage to pass data voltage therethrough, a first transistor serving as the first control element and to be brought into conduction upon the difference between the voltage to be applied to a gate thereof and the voltage at one terminal of the display element exceeding a predetermined threshold value, a second transistor serving as the second control element and to be brought into conduction upon the difference between the voltage to be applied to a gate thereof and the voltage at said one terminal of the display element exceeding a predetermined threshold value to bring the first transistor out of conduction, a capacitor interposed between the write transistor and the first transistor, and voltage control means for preventing the voltage at a terminal of the capacitor positioned closer to the first transistor from dropping below a predetermined potential, a voltage in accordance with the difference between a first ramp voltage and the data voltage is applied to the gate of the first transistor, and a second ramp voltage is applied to the gate of the second transistor.

23. A display device of the active matrix drive type according to claim 22 wherein the voltage control means comprises a third transistor to be brought into conduction when impressed with reset voltage to connect the terminal of the capacitor positioned closer to the first transistor to a power source having a voltage between the voltage of the power source to be applied to said one terminal of the display element and the luminescence starting voltage of the display element.

24. A display device of the active matrix drive type according to claim 22 wherein the voltage control means comprises a diode connected to the terminal of the capacitor positioned closer to the first transistor.

25. A display device of the active matrix drive type according to claim 11 wherein the control circuit of each pixel of the display panel has a write transistor to be brought into conduction when impressed with scanning voltage to pass data voltage therethrough, a first transistor serving as the first control element and to be brought into conduction upon the difference between the voltage to be applied to a gate thereof and the voltage at one terminal of the display element exceeding a predetermined threshold value, a second transistor serving as the second control element and to be brought into conduction upon the difference between the voltage to be applied to a gate thereof and the voltage at said one terminal of the display element exceeding a predetermined threshold value to bring the first transistor out of conduction, and a capacitor interposed between the write transistor and the first transistor, a voltage in accordance with the difference between a first ramp voltage and the data voltage is applied to the gate of the first transistor, and a second ramp voltage is applied to the gate of the second transistor, the display element having a greater capacitance value than the capacitor.

26. A display device of the active matrix drive type according to claim 11 wherein the control circuit of each pixel of the display panel has a first transistor serving as the first control element and to be brought into conduction upon the difference between the voltage to be applied to a gate thereof and the voltage at one terminal of the display element exceeding a predetermined threshold value, a second transistor serving as the second control element and to be brought into conduction upon the difference between the voltage to be applied to a gate thereof and the voltage at said one terminal of the display element exceeding a predetermined threshold value to bring the first transistor out of conduction, a capacitor having one terminal connected to a data voltage supply line and the other terminal connected to the second transistor, a third transistor to be brought into conduction only during the luminescence period within 1 frame to supply the voltage of the power source to the first transistor, and a fourth transistor to be brought into conduction when impressed with a reset signal to connect said other terminal of the capacitor to the power source, a voltage in accordance with the difference between a first ramp voltage and data voltage is applied to the gate of the first transistor, and a second ramp voltage is applied to the gate of the second transistor.

27. A display device of the active matrix drive type according to claim 11 wherein the control circuit of each pixel of the display panel has a write transistor to be brought into conduction when impressed with scanning voltage to pass data voltage therethrough, a first transistor serving as the first control element and to be brought into conduction upon the difference between the voltage to be applied to a gate thereof and the voltage of the power source exceeding a predetermined threshold value, a second transistor serving as the second control element and to be brought into conduction upon the difference between the voltage to be applied to a gate thereof and the power source voltage exceeding a predetermined threshold value to bring the first transistor out of conduction, a capacitor having one end connected to an output end of the write transistor, a third transistor to be brought into conduction when impressed with the scanning voltage to connect the other end of the capacitor to one end of the display element, and a fourth transistor to be brought into conduction during the luminescence period to apply a first ramp voltage to said other end of the capacitor, said one end of the capacitor being connected to the gate of the first transistor, a line for supplying a second ramp voltage being connected to the gate of the second transistor.

28. A display device of the active matrix drive type comprising a display panel having a plurality of pixels arranged in the form of a matrix, each of the pixels of the display panel having a display element luminescent when supplied with electric power, and a control circuit for controlling the luminescence period of the display element within 1 frame period in accordance with data voltage to be supplied from outside,
the display device being **characterized in that** the control circuit of each pixel of the display panel has a write transistor to be brought into conduction when impressed with scanning voltage, a capacitor to be impressed with data voltage by the conduction of the write transistor for holding the data voltage, and a drive transistor provided on and connected in series with a power supply line for supplying the electric power to the display element and to be brought into conduction upon the difference between the voltage to be applied to a gate thereof and the voltage at one terminal of the display element exceeding a predetermined threshold value, and that a voltage in accordance with the sum of ramp voltage having a predetermined rate of variation and the output voltage of the capacitor is applied to the gate of the drive transistor.
